# EUROPÄISCHE PATENTSCHRIFT

(11) **EP 4 251 494 B1**
(45) Veröffentlichungstag und Bekanntmachung des Hinweises auf die Patenterteilung: **31.07.2024**
(21) Anmeldenummer: 21824299.8
(22) Anmeldetag: 26.11.2021
(51) Int. Cl.: B62D 27/06, B62D 63/02, B62D 63/04

(54) **MODULBLOCK UND MODUL-BAUSATZ ZUR BEREITSTELLUNG EINES ROBOTER- ODER LOGISTIK-FAHRZEUGS**
MODULE BLOCK AND MODULE KIT FOR PROVIDING A ROBOT VEHICLE OR LOGISTICS VEHICLE
BLOC MODULAIRE ET KIT MODULAIRE POUR FOURNIR UN VÉHICULE ROBOT OU UN VÉHICULE LOGISTIQUE

(30) Priorität: 30.11.2020 DE 202020106888 U
(43) Veröffentlichungstag der Anmeldung: 04.10.2023
(73) Patentinhaber: KELO Robotics GmbH, 86159 Augsburg (DE)
(72) Erfinder: Shahsavari, Armin, 86159 Augsburg (DE)
(74) Vertreter: ERNICKE Patent- und Rechtsanwälte PartmbB
(86) Internationale Anmeldenummer: PCT/EP2021/083121
(87) Internationale Veröffentlichungsnummer: WO 2022/112484

(56) Entgegenhaltungen:
- EP-A1- 3 696 057
- EP-A1- 3 696 058
- AT-A1- 507 947

## Beschreibung

Die vorliegende Offenbarung betrifft einen Modulblock und einen Modul-Bausatz zur Bereitstellung von Roboterfahrzeugen oder Logistikfahrzeugen.

In der Praxis entsteht ein immer größerer Bedarf für schnell einrichtbare Transportsysteme, um Produktions- oder Handling-Abläufe in industriellen Umgebungen zu unterstützen. Während in Fabriken für die MassenHerstellung von PKW, LKW und ähnlichen Industriegütern hoch spezialisierte Transportsysteme bereits etabliert sind, eigenen sich diese aber kaum für eine Serienfertigung oder Branchen mit einem höheren Kostendruck oder kürzeren Produktzyklen. Denn die spezialisierten Transportsysteme sind zwar sehr effizient im Dauerbetrieb, bedürfen aber eines hohen Aufwands für eine Umrüstung auf einen neuen Produktionsprozess oder lassen sich nicht oder nur in engen Grenzen adaptieren.

Ferner sind Fahrzeuge mit einem festen Grundaufbau bekannt, die als universell einsetzbare Basis für Logistik-Roboter oder als Bewegungsplattformen für Industrie-Roboter dienen können. Diese Fahrzeuge sind in der Regel teuer im Anschaffungspreis und verfügen über proprietäre Schnittstellen, sodass sie nur vom Hersteller für einen neuen Einsatzzweck adaptierbar sind. Schließlich sind im Bereich der Spielzeugtechnik Modulsysteme bekannt, wie beispielsweise LEGO Mindstorms^{®}, aus denen sich verschiedene Arten von Fahrzeugen oder Robotern zusammensetzen lassen. Diese Modulsysteme weisen jedoch nicht die ausreichende Belastbarkeit auf, um Roboterfahrzeuge oder Logistikfahrzeuge für den Einsatz in Produktionsprozessen bereitzustellen.

Aus AT 507 947 B1 ist ein modulares Roboterfahrwerk bekannt, bei dem eine Mehrzahl von Fahrwerksmodulen miteinander verbindbar sind, um das Roboterfahrwerk zu bilden. Die Fahrwerksmodule haben die Grundform eines geraden Prismas, dessen Grundfläche durch ein Sechseck gebildet ist. Eine Radachse des Fahrwerkmoduls wird in einer Ebene parallel zur Grundfläche des Prismas und um eine auf die Grundfläche des Prismas normalstehende Schwenkachse verschwenkt, wobei die Schwenkachse das Prisma am Schwerpunkt seiner Grundfläche schneidet. An den Mantelflächen des Prismas sind einzelne Halte- und Andockelemente gebildet, die über die Mantelfläche überstehen.

CN 1 09 263 751 A sowie CN 1 08 725 628 A offenbaren automatisch geführte Transportfahrzeuge, bei denen ein Chassis in Rahmenform aus Streben und Säulen vorgesehen ist, die aus Konstruktionsprofilen bestehen. Alle elektrischen Komponenten sind jeweils an einer Außenseite einer solchen Strebe oder Säule befestigt. Die Radantriebe sind an den Rahmen angeschraubt.

Es ist Aufgabe der vorliegenden Erfindung, einen Modulblock aufzuzeigen, mit dem in einfacher und schneller Weise verschiedene Roboterfahrzeuge oder Logistikfahrzeuge mit frei wählbaren Abmaßen erstellbar sind, wobei an den erstellten Fahrzeugen direkt etablierte Prototypen-Konstruktionssysteme anbringbar sind, um beispielsweise neue Waren-Fördermittel zu bilden.

Es ist ferner eine Aufgabe der vorliegenden Erfindung, ein System von kombinierbaren Modulblöcken als Modul-Bausatz aufzuzeigen, mit dem schnell und einfach verschiedene Arten von Roboterfahrzeugen oder Logistikfahrzeugen als modulare Systeme aufbaubar sind.

Die Erfindung löst diese und weitere Aufgaben durch die Merkmale der eigenständigen Ansprüche.

Die Erfindung umfasst mehrere Aspekte, die jeweils für sich allein oder in beliebiger Kombination einen Beitrag zur Lösung der oben genannten oder weiterer Aufgaben leisten.

Ein erster Aspekt der Offenbarung betrifft einen Modulblock zur Konstruktion eines Roboterfahrzeugs oder Logistikfahrzeugs. Der offenbarungsgemäße Modulblock umfasst ein Gehäuse, das eine Komponentenaufnahme für mindestens eine elektronische Komponente aufweist. Die elektronische Komponente ist dazu ausgebildet, in Zusammenwirkung mit mindestens einer weiteren elektronischen Komponente eines weiteren Modulblocks eine gesteuerte Antriebsvorrichtung für das Roboterfahrzeug oder Logistikfahrzeug zu schaffen. Dabei kann die elektronische Komponente einen beliebigen Beitrag zur Unterstützung dieser Funktion leisten, beispielsweise einen Energiespeicher bereitstellen, eine Steuertechnik, insbesondere ein Steuergerät, bereitstellen oder Kommunikationsschnittstellen, Sensoren oder einen Radantrieb bereitstellen. Es sind auch beliebige Zwischenkombinationen möglich.

Das Gehäuse des offenbarungsgemäßen Modulblocks umfasst einen geraden Kastenprofilkörper, der eine Grundform mit einem entlang einer Axialrichtung einheitlichen Kastenquerschnitt aufweist. Der Kastenprofilkörper ist zu zwei gegenüberliegenden axialen Stirnseiten offen und schließt einen Hohlraum ringförmig ein. An zumindest einer der offenen Stirnseiten ist eine Deckplatte angeordnet, die die Öffnung in dieser Stirnseite übergreift. An mindestens zwei und bevorzugt allen Außenwandungen des Kastenprofilkörpers, die bevorzugt orthogonal zu den offenen Stirnseiten liegen, sind (jeweils) eine oder mehrere T-förmige Nuten vorgesehen. Die Deckplatte ist bevorzugt als stabile Tragplatte ausgebildet, insbesondere als eine Metallplatte oder als eine Platte aus einem Faserverbundwerkstoff, die das gemäß der Anzahl der Räder anteilige Stützgewicht des zu erstellenden Roboterfahrzeugs oder Logistikfahrzeugs trägt. Auf diese Weise bildet der Modulblock in Umfangsrichtung des Kastenprofilkörpers sowie an der Deckplatte ein mechanisch stützendes Gehäuse, in welchem beliebige elektronische Komponenten kollisionssicher aufnehmbar sind. Die Deckplatte ist weiterhin bevorzugt ein flaches und ebenes Bauteil, das also keine Erhebungen aufweist. Alternativ kann die Deckplatte ein profiliertes Bauteil sein.

Der Modulblock hat bei einer frei wählbaren Form des zu erstellenden Roboterfahrzeugs oder Logistikfahrzeugs einen doppelten Modulcharakter. Er ist
- ein mechanisch tragendes Modul mit einheitlicher geometrischer Form UND
- ein funktionales Modul der gesteuerten Antriebsvorrichtung oder des elektrischen / elektronischen Systems.

Dabei kann jeder Modulblock für eine relevante Systemkomponente vorgesehen sein, die ein zu erstellendes Roboterfahrzeug oder Logistikfahrzeug benötigt. Die Modulblöcke kann insbesondere eine der folgenden Ausbildungen haben:
- Antriebs-Block,
- Energiespeicher-Block,
- Steuertechnik-Block,
- Kommunikations-Block,
- Sensor-Block,
- Passivrad-Block.

Ein Modulblock mit dem vorgenannten Aufbau bietet mehrere Vorteile. Durch den Kastenprofilkörper ist eine stabile Einhausung gebildet, die für die Abstützung von Belastungen geeignet ist, die in Industrieanwendungen erwartbar sind. Dies können insbesondere Stützlasten von zu bewegenden Werkstücken oder Werkeinrichtungen sein und/oder Reaktionskräfte aus industriellen Bearbeitungsprozessen. Der Kastenprofilkörper kann bevorzugt aus einem Metall gefertigt sein. Er kann weiter bevorzugt ein stranggespresstes Profil sein, insbesondere ein Aluminium-Profil, ein Stahl-Profil oder ein Edelstahl-Profil.

Durch das Vorsehen der T-förmigen Nuten an mehreren Außenwandungen des Kastenprofilkörpers wird eine besonders hohe Kombinierbarkeit mit in der Praxis bereits etablierten Systemen für den Aufbau von Prototypen, Gestellen oder Arbeitseinrichtungen aus Konstruktionsprofilen geschaffen.

Konstruktionsprofile (auch Hohlkammerprofile oder Montageprofile) sind vornehmlich im Strangpressverfahren hergestellte längliche Halbzeuge aus Aluminium. Sie haben eine lineare Haupterstreckung und können eine in der Mittelachse liegende Bohrung aufweisen, deren Durchmesser in der Regel 3-6 Millimeter beträgt und die zur Aufnahme von Befestigungsschrauben dient. In den Außenflächen sind Nuten vorgesehen.

Bisher gibt es für Konstruktionsprofile keinen Standard bei der Nutgeometrie und den Verbindungsmöglichkeiten. Allerdings sind die äußeren Abmessungen bei den meisten Anbietern sehr ähnlich. Eine sehr häufig anzutreffende Dimensionierung ist die 40er Baureihe. Hierzu gehören Konstruktionsprofile, die eine äußere Abmessung von 40 mm × 40 mm, 40 mm × 80 mm oder 80 mm × 80 mm aufweisen. Weiterhin ist eine 20er Baureihe verfügbar, deren Profilstäbe entsprechende äußere Abmessungen von 20 mm × 20 mm usw. aufweist.

Besondere Vorteile bietet die vorgesehene Ausbildung eines ersten Modulblocks als Antriebs-Block, welcher als elektronische Komponente einen steuerbaren Radantrieb umfasst. Der Antriebs-Block kann einerseits mit weiteren Antriebs-Blöcken und andererseits mit zweiten / weiteren Modulblöcken verbunden werden. Der erste Modulblock umfasst als die erste elektronische Komponente (des elektrischen / elektronischen Systems des Roboterfahrzeugs bzw. Logistikfahrzeugs) den steuerbaren Radantrieb. Er bildet somit die mechanische Schnittstelle zum Untergrund, auf welchem das Roboterfahrzeug oder Logistikfahrzeug bewegt werden soll.

Die zweiten / weiteren Modulblöcke umfassen zweite / weitere elektronische Komponenten (der gesteuerten Antriebsvorrichtung und/oder des elektrischen / elektronischen Systems des Roboterfahrzeugs bzw. Logistikfahrzeugs), beispielsweise:
- eine Master-Batterie;
- eine Slave-Batterie;
- ein Steuergerät (Antriebssteuerung / Bewegungssteuerung);
- ein Schnittstellen-Gerät;
- ein Umgebungs-Erfassungsgerät;
- ein Bewegungserfassungsmittel zur vollständigen oder anteiligen Erfassung der Bewegung (Ist-Bewegung) des Roboterfahrzeugs oder Logistikfahrzeugs.

Durch die Aufnahme des steuerbaren Radantriebs in dem ersten Modulblock / Antriebs-Block, dessen Gehäuse durch den Kastenprofilkörper und die mindestens eine Deckplatte gebildet ist, ist der Radantrieb kollisionsgeschützt. Gleichzeitig ist der Antriebs-Block so ausgebildet, dass dessen Gehäuse, insbesondere dessen Kastenprofilkörper, ein selbsttragender Bestandteil des Chassis ist. Das Gehäuse des Antriebs-Blocks kann diverse Kräfte innerhalb des Chassis abstützen, darunter:
- anteilige Stützkraft für Eigengewicht des Roboterfahrzeugs oder Logistikfahrzeugs;
- anteilige Stützkraft für Zuladung des Roboterfahrzeugs oder Logistikfahrzeugs;
- anteilige Stützkraft für Reaktionskräfte aus Einsatz des Roboterfahrzeugs oder Logistikfahrzeugs oder seines Aufbaus;
- anteilige innere Stützkräfte.

Es ist somit möglich, ein Chassis eines Roboterfahrzeugs oder Logistikfahrzeugs ausschließlich aus den Modulblöcken gemäß der vorliegenden Offenbarung zu bilden. Mit anderen Worten können die direkt miteinander verbundenen Kastenprofilkörper der Modulblöcke an sich die selbsttragende Struktur des Chassis bilden.

Gleichzeitig bieten die Modulblöcke aber die Möglichkeit,
- auf ein Chassis, das rein aus den Modulblöcken gebildet ist, einen zusätzlichen Tragaufbau zu montieren, der beispielsweise ein Rahmen sein kann und/oder aus Konstruktionsprofilen bestehen kann, UND/ODER
- in das Chassis ergänzende Rahmenelemente aufzunehmen, die beispielsweise aus Konstruktionsprofilen bestehen können.

Ein weiterer Aspekt der vorliegenden Offenbarung betrifft einen Modul-Bausatz zur Bereitstellung eines Roboterfahrzeugs oder Logistikfahrzeugs. Der Modul-Bausatz umfasst eine Mehrzahl von Modulblöcken mit einer einheitlichen Schnittstellengeometrie. Die Modulblöcke können alle oder nun einen Teil der Merkmale umfassen, die oben erläutert wurden. Die Modulblöcke können insbesondere als aktive Modulblöcke mit einer elektronischen Komponente ausgebildet sein. Zusätzlich können passive Modulblöcke vorgesehen sein, die ohne eine solche elektronische Komponente ausgebildet sind. Die Modulblöcke des Modul-Bausatzes umfassen jeweils ein Gehäuse, das aus einem geraden Kastenprofilkörper mit den oben genannten Merkmalen sowie zumindest einer Deckplatte gebildet ist, die eine der offenen Stirnseiten übergreift.

In dem Modul-Bausatz können mehrere gleichartige oder unterschiedliche Modulblöcke umfasst sein, die eine elektronische Komponente umfassen und einen Funktionsbeitrag zur Bildung der gesteuerten Antriebsvorrichtung oder des elektrischen / elektronischen Systems leisten. Darüber hinaus können ein oder mehrere gleichartige oder unterschiedliche passive Modulblöcke vorgesehen sein, die keine elektronische Komponente umfassen. Die passiven Modulblöcke können beispielsweise (rein) mechanische Komponenten umfassen, die einen Beitrag zur Bildung der gesteuerten Antriebsvorrichtung leisten. Dies können beispielsweise ein oder mehrere nicht-angetriebene Räder sein. Alternativ kann mindestens ein passiver Modulblock dazu vorbereitet sein, eine vom Anwender hinzugefügte elektronische Komponente aufzunehmen.

Weiterhin kann der Modul-Bausatz ein oder mehrere separate Befestigungsmittel und elektronische Bauteile umfassen, die als Einzel-Komponenten vorliegen und an einem einzelnen Modulblock oder an einer Gruppe von miteinander verbundenen Modulblöcken befestigbar sind, wobei die Befestigungsmittel bevorzugt auf die einheitliche Schnittstellengeometrie der Modulblöcke adaptiert sind. Weiter unten werden bestimmte besonders bevorzugte Befestigungsmittel erläutert, die besondere Vorteile bieten und einen Beitrag zur Lösung der oben genannten oder weiterer Aufgaben leisten.

Die einheitliche Schnittstellengeometrie der Modulblöcke basiert zumindest auf der Verwendung eines Einheits-Maßes, das eine Grund-Länge vorgibt. Die äußeren Abmaße der Modulblöcke und die vorzusehenden Abstände zwischen den T-förmigen Nuten sind bevorzugt als ganzzahlige Vielfache dieses Einheits-Maßes festgelegt. Das Seitenverhältnis der äußeren Abmaße beträgt bevorzugt n-zu-n (Vollformatblock, quadratisches Querschnittsmaß) oder 2n-zu-n (Halbformatblock), wobei "n" eine natürliche Zahl ist.

Weitere vorteilhafte Ausbildungen der Erfindung ergeben sich aus den Unteransprüchen, der nachfolgenden detaillierten Beschreibung sowie den beigefügten Zeichnungen.

Die Erfindung ist in den Zeichnungen beispielhaft und schematisch dargestellt. Diese zeigen:
- Figuren 1 und 2:: Beispiele für Roboter-/ oder Logistikfahrzeuge, die aus verschiedenartigen Modulblöcken aufgebaut ist;
- Figur 3:: eine Explosionsdarstellung eines Modulblocks in einer bevorzugten Ausführung;
- Figuren 4 und 5:: bevorzugte Beispiele für Nachbar-Verbinder, um zwei nebeneinander angeordnete Modulblöcke lösbar miteinander zu fixieren;
- Figuren 6 und 7:: Beispiele für Verbindungen zwischen Modulblöcken untereinander oder zu einem Konstruktionsprofil mittels Winkelbeschlägen;
- Figuren 8 und 9:: Ausführungsvarianten von Deckplatten;
- Figuren 10 und 11:: Anordnungsvarianten für einen Brückenträger zur Befestigung externer Komponenten an einem oder mehreren benachbarten Modulblöcken;
- Figuren 12 und 13:: Erläuterungen eines Kabelmanagements an Modulblöcken;
- Figur 14:: Detaildarstellung eines Profilaufsatzes mit einem Kabelführungskanal;
- Figuren 15 bis 18:: Bevorzugte Ausführungsvarianten von Modulblöcken mit unterschiedlichen Funktionsbeiträgen;
- Figuren 19 bis 21:: Befestigungsmittel, zur Ausrichtung von Modulblöcken innerhalb einer Stapellage oder zur Verbindung mit benachbarten Stapellagen;
- Figuren 22 und 23:: ein Roboter- oder Logistikfahrzeug mit einem Tragaufbau zum Einsatz als Flurförderfahrzeug;
- Figur 24:: ein omnidirektionaler Radantrieb zur Aufnahme in einem Modulblock;
- Figur 25:: Modulblock mit einem Passivrad;
- Figuren 26 bis 31:: Beispiele für weitere Befestigungsmittel und Zusatzkomponenten des Modul-Bausatzes;
- Figuren 32 bis 35:: weitere Detaildarstellungen zur Erläuterung des Kabelmanagements.

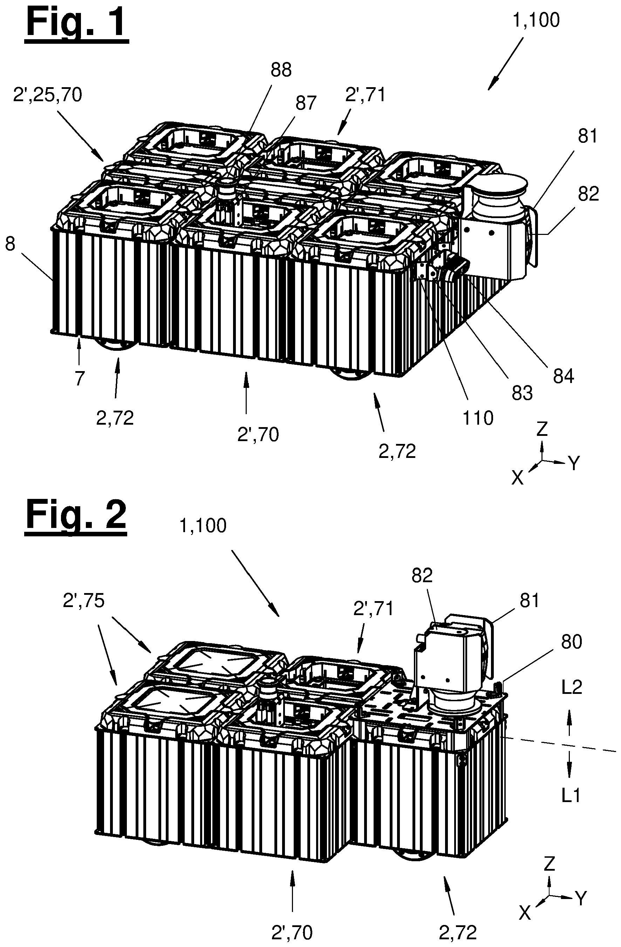

Figuren 1 und 2 zeigen Beispiele für ein Roboterfahrzeug (1), das durch einen Modul-Bausatz (100) gemäß der vorliegenden Offenbarung mit mehreren (verschiedenartigen) Modulblöcken (2, 2') aufgebaut ist. Die Modulblöcke (2, 2') haben eine einheitliche Schnittstellengeometrie. Sie unterscheiden sich in Ihrer Komponenten-Ausstattung und ihrem Funktionsbeitrag zur Bildung einer Antriebsvorrichtung und des elektrischen / elektronischen Systems des Roboterfahrzeugs / Logistikfahrzeugs (1).

Die Antriebsvorrichtung und das elektrische / elektronische System des Roboterfahrzeugs / Logistikfahrzeugs (1) umfasst mehrere elektronische Komponenten (15, 15'). Eine erste elektronische Komponente (15) ist der mindestens eine steuerbare Radantrieb (60), der in dem mindestens einen Antriebs-Block (72) vorgesehen ist. Weitere elektronische Komponenten (15') sind auf weitere Modulblöcke (2') verteilt.

Beide Beispiele von Figuren 1 und 2 umfassen entsprechend jeweils mindestens einen ersten Modulblock (2), der als Antriebs-Block (72)ausgebildet ist und als die erste elektronische Komponente (15) einen steuerbaren Radantrieb (60) umfasst sowie weitere Modulblöcke (2'), darunter mindestens einen Energiespeicher-Block (70), der als weitere elektronische Komponente (15') eine Master-Batterie oder eine Slave-Batterie umfasst, sowie einen Steuertechnik-Block (71), der als weitere elektronische Komponente (15') ein Steuergerät umfasst.

In dem Beispiel von Figur 2 ist genau ein Antriebs-Block (72) vorgesehen. Dieser umfasst einen steuerbaren Radantrieb (60), der als omnidirektionaler Radantrieb (61) ausgebildet ist.

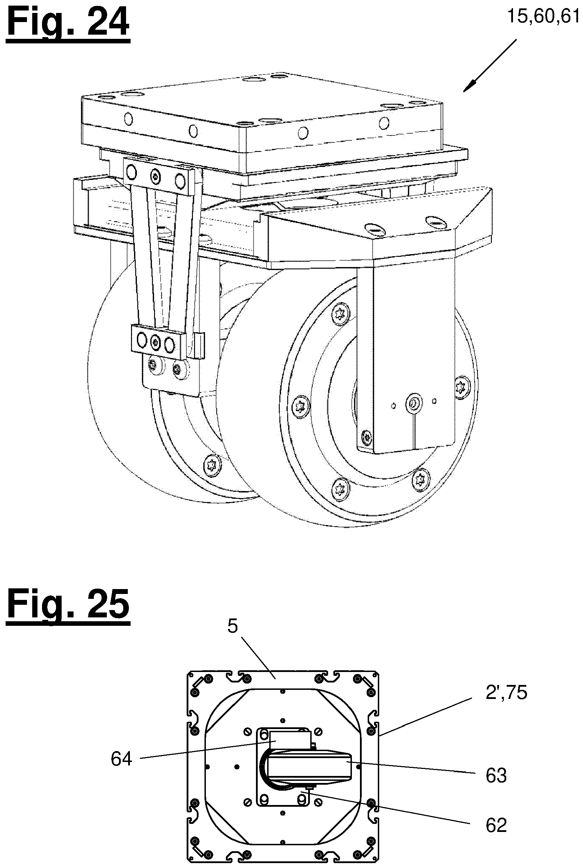

Der omnidirektionale Radantrieb (61) stellt einen eigenständigen Aspekt der vorliegenden Offenbarung dar und ist in Figur 24 in Alleinstellung dargestellt.

Bei dem omnidirektionalen Radantrieb (61) handelt es sich bevorzugt um eine eigensichere Antriebsvorrichtung. Sie weist besondere Vorteile für den sicheren Betrieb in Umgebungen auf, in denen ein Kontakt des Roboter- oder Logistikfahrzeugs (1) mit Menschen stattfinden kann.

Der omnidirektionale Radantrieb (61) gemäß der vorliegenden Offenbarung kann auch eingesetzt werden, um medizinisches Gerät oder Lasten zumindest zeitweise im Behandlungsbereich eines Krankenhauses zu bewegen. In solchen Umgebungen ist es einerseits wichtig, dass durch die angetriebene Bewegung des Roboter- oder Logistikfahrzeugs (1) keine Unfälle mit Personenschäden verursacht werden. Andererseits sollte das Roboter- oder Logistikfahrzeug (1) im Fall einer Evakuierung von unkundigen Personen aus dem Fluchtweg oder einer Räumungszone entfernbar sein. Der omnidirektionale Radantrieb (61) trägt bevorzugt beiden Bedürfnissen Rechnung, indem er dazu ausgebildet ist, dass er im angetriebenen Zustand und/oder im passiven Zustand durch eine von außen aufgebrachte Kraft rücktreibbar oder gesteuert ausweichfähig ist. Im Gebiet der Robotik ist für die Rücktreibbarkeits- oder gesteuerte Ausweichfähigkeits-Funktion der Begriff "backdrivability" etabliert.

Der omnidirektionale Radantrieb (61), ein damit ausgestattetes Roboter- oder Logistikfahrzeug (1) sowie ein Modul-Bausatz (1) gemäß der vorliegenden Offenbarung bieten ein eigen-sicheres Antriebskonzept, das zumindest eine passive Rücktreibbarkeits-Funktion und bevorzugt zusätzlich eine gesteuerte Ausweichfähigkeits-Funktion umfasst.

Der omnidirektionale Radantrieb (61) umfasst einen Schwenkradträger mit einer aufrechten Lenkachse. Der Schwenkradträger ist frei um die Lenkachse drehbar. Bevorzugt wird der Schwenkradträger über die Lenkachse direkt oder indirekt mit dem Modulblock (2), insbesondere mit einer Deckplatte (5) verbunden. Die Lenkachse bildet somit die wesentliche Lagerstelle, an der die von der Antriebsvorrichtung erzeugte Antriebswirkung mechanisch auf den Modulblock und damit auf den Korpus des Roboter- oder Logistikfahrzeugs (1) übertragen wird.

Der omnidirektionale Radantrieb umfasst zwei separat antreibbare Räder, die gemeinsam an dem Schwenkradträger (auch Nachlauf-Radträger genannt) gelagert sind. Der Schwenkradträger ist wiederum um die vertikale Lenkachse drehbar an einer Flanschplatte gelagert. Die vertikale Drehachse ist dabei um einen Nachlaufversatz windschief zu den Radachsen angeordnet. Durch diesen Nachlaufversatz wird die passive Rücktreibbarkeits-Funktion gefördert. Wenn von außen eine Kraft auf das Roboter- oder Logistikfahrzeug (1) oder den Modulblock (2) ausgewirkt wird, wird zumindest ein Teil dieser Kraft über die Lenkachse auf den Schwenkradträger übertragen.

Aufgrund des Nachlaufversatzes bewirkt diese an der Lenkachse angreifende Kraft, sofern ihr horizontaler Kraftanteil nicht exakt senkrecht zur Radachse verläuft, ein Drehmoment, das den Schwenkradträger zu einer Neuausrichtung drängt.

Der omnidirektionale Radantrieb (61) umfasst ein erstes Antriebsrad und ein zweites Antriebsrad, die um die Radachse drehbar und zueinander benachbart angeordnet sind. Durch die benachbarte Anordnung der Antriebsräder wird gemäß der Momentanpol-Lehre eine Randbedingung für die Beweglichkeit des Schwenkradträgers erzeugt. Der Schwenkradträger kann Rotationsanteile seiner Bewegung nur um einen Momentanpol ausführen, der auf der Radachse liegt. Das vorgenannte Drehmoment, das gemäß der obigen Erläuterung aus einer von außen einwirkenden Kraft hervorgeht, drängt den Schwenkradträger im passiven Zustand in eine Nachlauforientierung, bei der der Nachlaufversatz parallel zur Einwirkungsrichtung der externen Kraft ausgerichtet ist und die Radachse hinter der Lenkachse nachläuft.

Der omnidirektionale Radantrieb (61) ist wegen des vorgenannten Effektes durch eine Kraft, die an dem Roboter- oder Logistikfahrzeug oder (direkt oder mittelbar) an der Lenkachse von außen einwirkt, in jede beliebige Richtung in der Ebene schiebbar und somit omnidirektional ausweichfähig.

Der omnidirektionale Radantrieb (61) weist mindestens zwei Radantriebe auf sowie bevorzugt eine (integrierte) Bewegungsregelung, die dazu ausgebildet ist, den Radantrieb (61) in eine beliebige Richtung in der Horizontalebene zu bewegen, indem die Radbewegungen des ersten und des zweiten Antriebsrades gesteuert werden.

Durch die gesteuerte Radbewegung kann der Radantrieb (61) omnidirektional in der Ebene verfahren werden. Die oben erläuterten Kräftebeziehungen zwischen den Antriebsrädern bzw. der Radachse einerseits und der Lenkachse andererseits gelten bei der angetriebenen Fahrbewegung in umgekehrtem Sinn. Durch eine geeignete Wahl der Radbewegungen kann somit im Bereich der Lenkachse eine beliebige Antriebskraft auswirkt werden, durch die der Modulblock (2) (oder auch das Roboter- oder Logistikfahrzeug (1) insgesamt) omnidirektional in der Ebene verfahrbar ist.

Die Radantriebe sind bevorzugt selbsthemmungsfrei ausgebildet, sodass das erste und das zweite Antriebsrad im passiven / stromfreien Zustand des Radantriebs frei um die Radachse drehbar sind. Die Radantriebe sind bevorzugt weiterhin dazu ausgebildet, die jeweils anzutreibenden Antriebsräder in einer bestimmten Drehlage zu halten, zu beschleunigen oder abzubremsen.

Die Radachsen des Radantriebs (61) können zusätzlich über eine Kippmechanik gegenüber der Flanschplatte beweglich sein, beispielsweise um Unebenheiten im Untergrund kompensieren zu können.

Alternativ zu dem in Figur 24 gezeigten Antrieb kann ein beliebiger anderer omnidirektionaler Radantrieb verwendet werden.

Das Roboterfahrzeug (1) gemäß dem Beispiel von Figur 2 umfasst auch zwei Passivrad-Blöcke (2` 75), welche jeweils über ein oder mehrere nicht-angetriebene Räder (63) verfügen.

Das Roboterfahrzeug (1) gemäß dem Beispiel von Figur 2 umfasst weiterhin einen Stapelaufbau mit einer ersten Stapellage (L1) und einer zweiten darüber angeordneten Stapellage (L2).

Alle Modulblöcke sind in dem Beispiel von Figur 2 in der ersten Stapellage (L1) angeordnet und untereinander mechanisch verbunden. In der darüber liegenden Stapellage (L2) ist eine Zusatz-Trägerplatte (80) vorgesehen, an der ein oder mehrere zusätzliche elektronische Komponenten oder andere Bestandteile des Modul-Bausatzes (100) befestigbar sind. In dem gezeigten Beispiel ist mittels einer Sensor-Halterung (81) ein LIDAR-Sensor (82) befestigt. Wenn eine noch kompaktere Außenform erwünscht ist, können beispielsweise ein oder mehrere Energiespeicher-Blöcke (70) und/oder ein oder mehrere Steuertechnik-Blöcke (71) in eine zweite Stapellage (L2) versetzt werden (nicht dargestellt).

Bei dem Roboterfahrzeug (1) gemäß dem Beispiel von Figur 1 ist ein anderer Aufbau gezeigt. Hier verfügt das Roboter- oder Logistikfahrzeug (1) über insgesamt vier Antriebs-Blöcke (2, 72), die jeweils mit einem steuerbaren Radantrieb (60) ausgestattet sind, der weiter insbesondere ein omnidirektionaler Radantrieb (61) gemäß dem oben erläuterten Beispiel ist. Ferner umfasst das Roboterfahrzeug (1) einen Energiespeicher-Block (2', 70) sowie einen Steuertechnik-Block (2', 71) und auf einer Mittelachse insgesamt drei Halbformat-Blöcke (2', 25), von denen einer oder mehrere mit einer Slave-Batterie ausgestattet sein kann. Alle Modulblöcke sind hier auf derselben Stapellage (L1) angeordnet. Wie oben erläutert, sind alternativ ein oder Modulblöcke (2) in einer zweiten Stapellage (L2) anordenbar, die über der Stapellage (L1) mit den Radantrieben liegt.

An einer Stirnseite des Roboterfahrzeugs (1) gemäß Figur 1 sind zueinander benachbart über mehrere Bügelträger (110) und weitere angepasste Befestigungsmittel (81, 83) ein LIDAR-Sensor (82) und zusätzlich eine Time-of-Flight Camera (84) vorgesehen.

Ein Modul-Bausatz (100) oder ein Roboter- oder Logistikfahrzeug (1) gemäß der vorliegenden Offenbarung kann alternativ oder zusätzlich zu den in Figuren 1 und 2 gezeigten aktiven Modulblöcken (2, 2') über weitere aktive oder passive Modulblöcke (2) mit anderen Funktionsbeiträgen verfügen. Der Modul-Bausatz (100) oder das Roboterfahrzeug (1) kann beispielswiese einen Sensor-Block (2', 74) umfassen, der als weitere elektronische Komponente (15') mindestens ein Messgerät umfasst. Ein solches Messgerät kann beispielsweise ein Beschleunigungssensor, ein optischer Abtastsensor, insbesondere zur Erfassung von Markierungen auf der Fahrbahn, ein Näherungssensor oder ein sonstiger Sensor sein, der dazu geeignet ist, Umfelderfassungsdaten zu erzeugen, die für eine Antriebssteuerung des Roboterfahrzeugs (1) nutzbar sind.

Weiterhin kann in dem Modul-Bausatz (100) bzw. an einem Roboterfahrzeug (1) als optionales Element ein Kommunikations-Block (2', 73) vorgesehen sein, der als weitere elektronische Komponente (15) ein Schnittstellengerät umfasst, beispielsweise ein grafisches Display (90), ein Touch-Display oder Bedienelemente wie Knöpfe, Schalter, Joysticks, Drehregler, Schieberegler oder sonstige zweckmäßige Eingabegeräte. Alternativ oder zusätzlich kann ein Kommunikations-Block (2', 73) eine Schnittstelle zur drahtgebundenen oder drahtlosen Außen-Kommunikation umfassen, beispielsweise per Funk, Infrarot, Bluetooth, W-Lan, NFC (Near-Field-Communication) oder nach einem sonstigen geeigneten Kommunikationsformat.

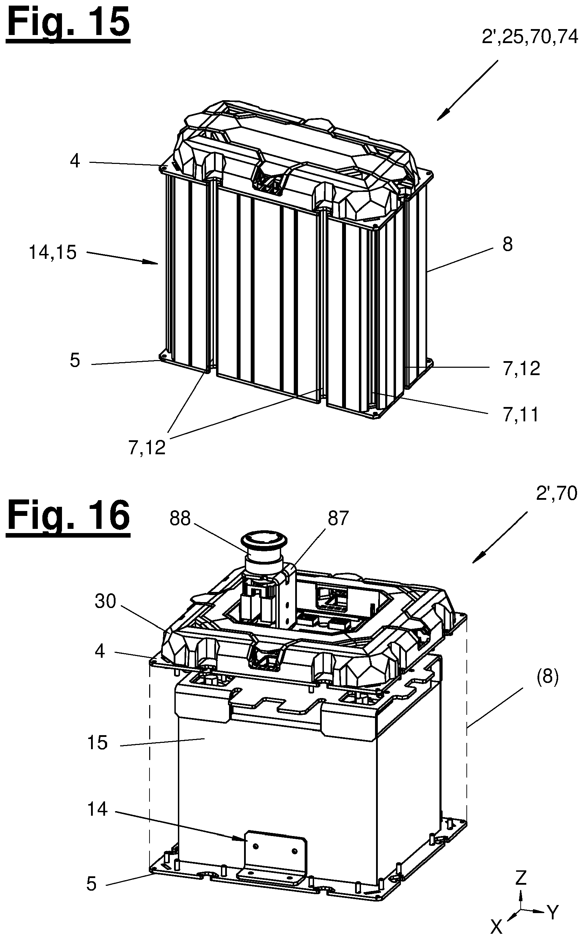

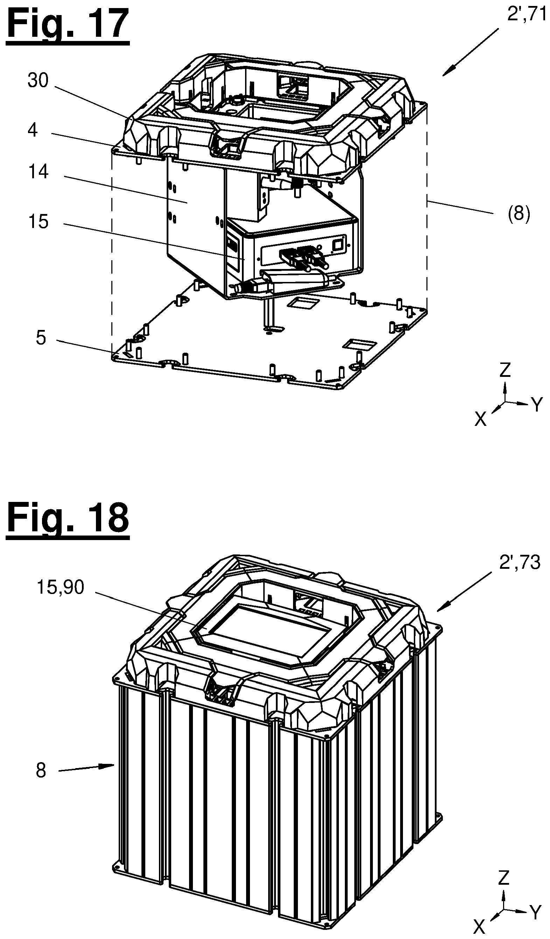

Figuren 15 bis 18 zeigen weitere Ausführungsbeispiele für einen Halbformat-Block (25), einen Energiespeicher-Block (70) mit einer Master-Batterie und einem Notaus-Knopf (88), einen Steuertechnik-Block (71) mit einem Steuergerät sowie den vorerwähnten Kommunikations-Block (73) mit einem grafischen Display (90). Die hier gezeigten Format- und Ausstattungsmerkmale der Modulblöcke (2, 2') sind beliebig miteinander kombinierbar oder untereinander austauschbar.

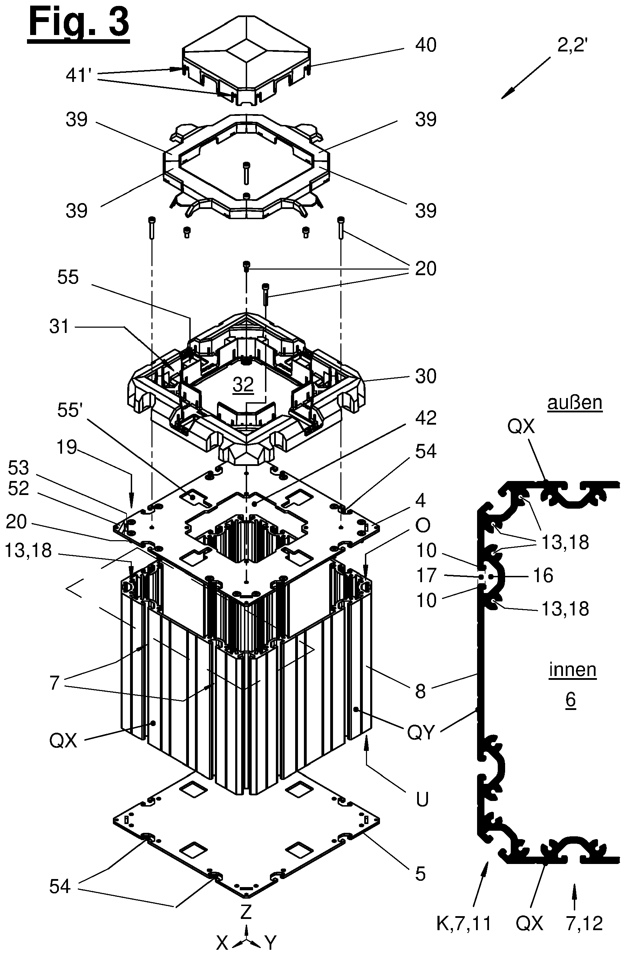

Figur 3 zeigt den bevorzugten (mechanischen) Aufbau eines Modulblocks (2, 2') gemäß der vorliegenden Offenbarung. Figur 3 erläutert dabei verschiedene Aspekte der einheitlichen Schnittstellengeometrie, die sowohl für aktive, wie auch passive Modulblöcke (2, 2') nutzbar sind.

In dem Beispiel von Figur 3 ist ein passiver Modulblock (2, 2') gezeigt, der zur vereinfachten Darstellung keine elektronische Komponente (15, 15') umfasst. Eine solche elektronische Komponente (15, 15') kann jedoch an und bevorzugt in dem Modulblock (2, 2') angeordnet sein. Die elektronische Komponente (15, 15') ist bevorzugt zumindest anteilig im Hohlraum (6) aufgenommen, der sich innerhalb des Kastenprofilkörpers (2) befindet. Der Hohlraum (6) kann ferner in einem Raum zwischen den offenen Seiten (O, U) des Kastenprofilkörpers definiert sein. Der Hohlraum (6) ist dabei bevorzugt direkt durch die Außenwandungen (Querseiten QX, QY und Eckbereiche K) des Kastenprofilkörpers (8) begrenzt. Bei einem passiven Modulblock (2'), der für einen rein mechanisch stützenden Einsatz oder für eine Nachbestückung durch den Anwender vorgesehen ist, ist der Hohlraum (6) bevorzugt leer. Bei einem aktiven Modulblock (2, 2') befindet sich in dem Hohlraum (2) bevorzugt ausschließlich die elektronische Komponente (15, 15'), sowie etwaig deren Befestigungsmittel und Anschlussmittel. Die elektronische Komponente (15, 15') kann direkt an dem Gehäuse des Modulblocks (2), d.h. an dem Kastenprofilkörper und/oder an der mindestens einen Deckplatte (4, 5) befestigt sein. Alternativ kann eine mittelbare Befestigung am Gehäuse über zusätzliche Befestigungsmittel vorgesehen sein.

Die Komponentenaufnahme (14) für die elektronische Komponente (15, 15') kann entsprechend eine beliebige Ausbildung haben. Sie kann durch mindestens eine der Deckplatten (4,5) und/oder durch den Kastenprofilkörper (8) und die dort jeweils vorgesehenen Schnittstellen gebildet sein.

Der Kastenprofilkörper (8) hat eine gerade Grundform mit einem entlang einer Axialrichtung (Z) einheitlichen Kastenquerschnitt. Der Kastenquerschnitt ist auf der rechten Seite von Figur 3 in einer vergrößerten Teilansicht gezeigt, die mit dem eingerahmten Abschnitt in der danebenliegenden Explosionsdarstellung korrespondiert. Es handelt sich um eine Draufsicht auf den Kastenquerschnitt in der Axialrichtung (Z).

Der Kastenprofilkörper (8) ist an zwei gegenüberliegenden axialen Stirnseiten (O, U) offen und schließt einen Hohlraum (6) ringförmig ein. Die Axialrichtung (Z) ist in der vorgesehenen Verwendung beziehungsweise im vorgesehenen Montagezustand bevorzugt eine vertikale Richtung, so dass eine erste offene Stirnseite des Kastenprofilkörpers (8) die Oberseite (O) und eine zweite offene Stirnseite die Unterseite (U) sind. Zumindest eine dieser offenen Stirnseiten und insbesondere die Oberseite (O) ist durch eine Deckplatte (4) teilweise verschlossen. Die Deckplatte (4, 5) ist derart angeordnet, dass sie die Öffnung der Stirnseite (O, U) übergreift. Sie ist bevorzugt fest (aber lösbar) mit dem Kastenprofilkörper (8) verbunden, insbesondere durch eine Schraubverbindung, weiter bevorzugt durch eine positionierende Verbindung, die die Deckplatte (4, 5) relativ zum Kastenprofilkörper exakt ausrichtet und (8) platziert.

Der Kastenprofilkörper (8) ist bevorzugt einstückig und insbesondere als Abschnitt eines Strangpressprofils ausgebildet. Er weist mehrere Außenwandungen auf, die jeweils miteinander einstückig verbunden sind. Die Außenwandungen haben bevorzugt jeweils eine Grundform mit einer flachen Außenkontur, so dass eine und bevorzugt jede Außenwandung eine insgesamt ebene Kontaktfläche bereitstellt. An mindestens zwei und bevorzugt allen Außenwandungen des Kastenprofilkörpers (8) sind eine oder mehrere T-förmige Nuten (7) vorgesehen. Die T-förmigen Nuten (7) erstrecken sich in der Längsrichtung (Z) des Kastenprofilkörpers (8). Mit anderen Worten ist die mindestens eine T-förmige Nut (7) parallel zur Axialrichtung (Z) orientiert.

In den Beispielen, die in den beigefügten Figuren gezeigt sind, hat der Kastenprofilkörper (8) eine Grundform mit einem entlang der Längsrichtung (Z) rechteckigen oder quadratischen Querschnitt. Alternativ kann auch ein anderer Querschnitt mit der Grundform eines Vielecks vorgesehen sein, insbesondere ein Sechseck- oder Achteck-Querschnitt. Im Weiteren wird zur Vereinfachung der Darstellung davon ausgegangen, dass ein rechteckiger oder quadratischer Querschnitt vorliegt.

Der Kastenprofilkörper (8) weist bevorzugt mehrere Querseiten auf, insbesondere mehrere Paare von Querseiten, die zueinander parallel ausgerichtet sind. Die Querseiten (QX, QY) können für sich allein oder in Kombination mit dazwischen liegenden Kantenbereichen (K) die Außenwandungen des Kastenprofilkörpers (8) bilden.

In den gezeigten Beispielen weist der Kastenprofilkörper (8) erste Querseiten (QX) mit einer ersten Breite (BX) und zweite Querseite (QY) mit einer zweiten Breite (BY, BY') auf. Diese Breiten (BX, BY, BY') sind bevorzugt jeweils ein ganzzahliges Vielfaches des Einheits-Maßes (E).Die Breiten können zueinander insbesondere im Verhältnis n-zu-n (Vollformat) oder 2n-zu-n (Halbformat) stehen, wobei n eine natürliche Zahl ist. Weiter bevorzugt ist das Verhältnis E-zu-E oder 2E-zu-E, wobei E das Einheits-Maß ist. Optional sind auch andere Verhältnisse möglich.

Das Einheits-Maß (E) kann einen beliebigen Wert haben. Es ist bevorzugt eine Länge zwischen 40mm und 500mm, weiter bevorzugt eine Länge von 40mm, 60mm, 80mm, 100mm, 120mm, 140mm, 160mm, 180mm oder 200mm.

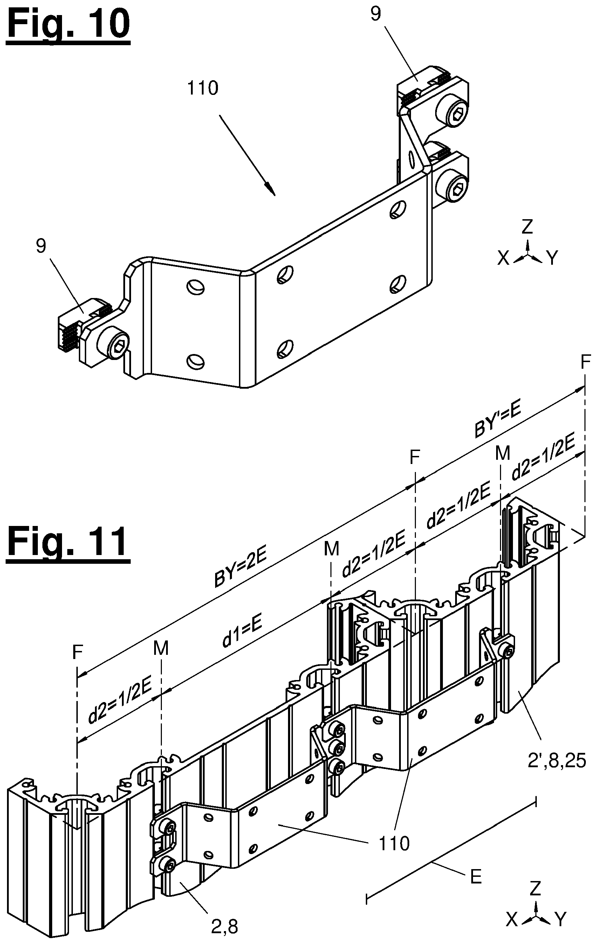

Figur 11 zeigt eine vergrößerte Schnittansicht von einem Modulblock (2) gemäß dem Beispiel aus Figur 3 und einem benachbarten Halbformat-Modulblock (2', 25). In dem Beispiel von Figur 11 sind weiterhin Mittellinien (M) der T-förmigen Nuten (7) sowie Flächenübergänge (F) als Fluchtlinien zwischen benachbarten Querseiten (QX, QY) gezeigt.

Der Abstand (d1) einer Mittellinie (M) einer ersten T-förmigen Nut (7) zur Mittellinie (M) einer benachbarten T-förmigen Nut (7) hat bevorzugt den einfachen Betrag des Einheits-Maßes (E). Der Abstand (d2) zwischen der Mittellinie (M) einer T-förmigen Nut (7) und dem Flächenübergang (F) hat bevorzugt den halben Betrag des Einheits-Maßes (E). Mit anderen Worten hat der Abstand (d2) einer T-förmigen Nut (7) auf einer Querseite (QX, QY) zu dem Flächenübergang (F) zu einer benachbarten Querseite (QY, QX) den halben Betrag des Einheits-Maßes (E) .

Ein Kantenbereich (K) des Kastenprofilkörpers (8), der in Längsrichtung (Z) orientiert ist und zwischen zwei benachbarten Querseiten (QX, QY) des Kastenprofilkörpers (8) liegt, kann eine beliebige Ausbildung haben. Er kann beispielsweise als kantiger Übergang oder mit einer Rundung ausgeführt sein. Gemäß einer besonders bevorzugten Ausführung ist der Kantenbereich (K) jedoch gefast und hat eine gegenüber den Querseiten (QX, QY) abgeschrägte Oberfläche. Diese Ausführung ist in allen Figuren gezeigt. An dem Kantenbereich (K) kann weiterhin bevorzugt eine weitere T-förmige Nut (7) angeordnet sein.

Eine T-förmige Nut (7) kann eine beliebige Form haben. In den Zeichnungen ist eine bevorzugte Ausführungsform einer T-förmigen Nut (7) dargestellt, insbesondere in den Vergrößerungen und Detailansichten der Figuren 3 bis 8.

Die T-förmige Nut (7) bildet einen Freiraum (16), der gegenüber der Außenoberfläche (oder gegenüber der Außenkontur gemäß der Querschnitt-Grundform) des Kastenprofilkörpers (8) nach innen zurückversetzt ist. Am Übergang von diesem Freiraum (16) zur Außen- und Oberfläche des Kastenprofilkörpers (8) sind zwei einander gegenüber liegende Kragenleisten (10) vorgesehen. Die Kragenleisten (10) sind bevorzugt einstückig mit dem Kastenprofilkörper (8) verbunden. Zwischen den Kragenleisten (10) bleibt ein Durchgang (17) frei, dessen Breite geringer ist als die Breite des zurückversetzten Freiraums (16). Der Durchgang (17) und der Freiraum (16) bilden also zusammen im Querschnitt eine T-Form. Die Kontur der T-förmigen Nut (7), die den Freiraum (16) nach innen hin begrenzen, ist dabei bevorzugt gewölbt oder gerundet.

In die T-förmige Nut (7) kann entlang der Längsrichtung (Z) ein Befestigungsmittel einführbar sein, bzw. eingeführt werden, beispielsweise ein StandardBefestigungsmittel wie ein Nutenstein oder Kulissenstein (9) oder ein Schraubenkopf, wobei sich das StandardBefestigungsmittel an den nach innen liegenden Seiten der Kragenleisten (17) abstützt. Nutensteine (9) können außerdem quer zur Längsrichtung (Z) in die T-förmige Nut eingeführt werden, weshalb die Modulkörper (2) in besonderer Weise für eine Nachrüstung von Anbauteilen geeignet sind.

Aus der Verwendung von Konstruktionsprofilen ist es bekannt, dass das Verbinden von zwei direkt benachbarten Profilstangen (23) problematisch sein kann. Denn in diesem Fall sind keine Standard-Verbinder, insbesondere keine Nutensteine (9) nutzbar, oder es muss an einer der benachbarten Profilstangen (23) eine Bohrung oder sonstige Öffnung eingearbeitet werden, um ein Befestigungsmittel hindurchzustecken.

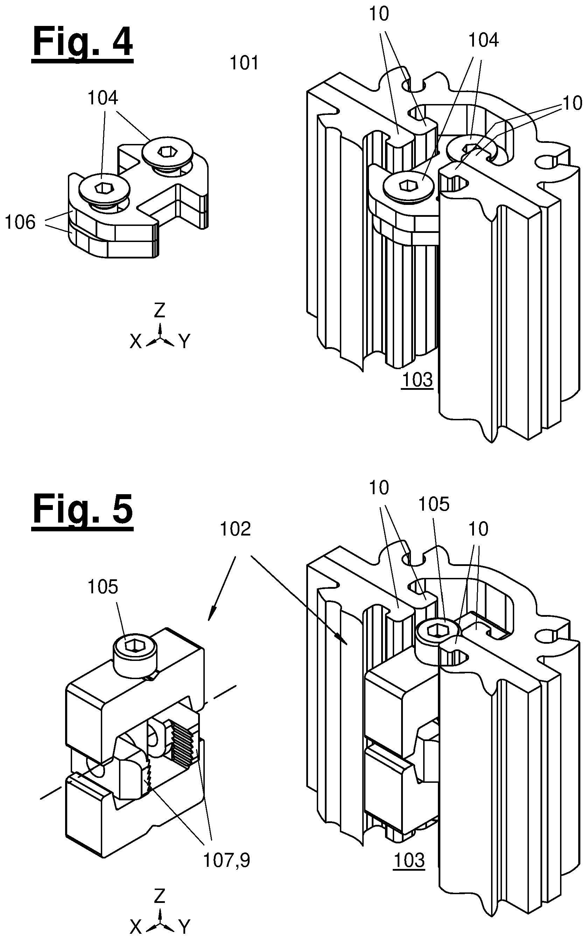

Gemäß einem eigenständigen Aspekt der vorliegenden Offenbarung wird ein Nachbar-Verbinder (101,102) vorgeschlagen, der dazu vorgesehen und ausgebildet ist, eine lösbare Fixierung zwischen zwei Modulblöcken (2, 2') herzustellen und dabei in eine Doppel-T Passage (103) eingeführt werden, die zwischen zwei direkt benachbart angeordneten T-förmigen Nuten (7) gebildet ist. Figuren 4 und 5 zeigen Beispiele solcher Nachbar-Verbinder (101, 102). Durch die Verwendung eines solchen Nachbar-Verbinders (101, 102) kann auf eine mechanische Bearbeitung der Kastenprofilkörper (8) verzichtet werden und trotzdem eine direkte Verbindung an direkt nebeneinander liegenden T-förmigen Nuten (7) erzeugt werden. Somit wird eine schnell erzeugbare und flexible Befestigung zwischen benachbarten Modulblöcken (2, 2') erreicht, was einen eigenständigen Beitrag zur Lösung der o.g. Aufgaben oder weiterer Aufgaben der Offenbarung darstellt. Mit "benachbarten Modulblöcken (2, 2`)" ist gemeint, dass diese mit je einer Außenfläche der beiden Kastenprofilkörper (8) direkt aneinander stoßen. Die Modulblöcke können insbesondere in derselben Stapellage (L1 / L2) direkt nebeneinander angeordnet sein.

Eine Doppel-T Passage (103) ist in den Figuren 4 und 5 in Schrägbild sowie weiterhin in Figur (6) in einer Querschnittansicht gezeigt. Die dargestellten Nachbar-Verbinder (101, 102) sind für die Herstellung einer formschlüssigen Verbindung zwischen zwei benachbarten Modulblöcken (2, 2') vorgesehen und geeignet. Sie sind ferner dazu geeignet, eine Verbindung zwischen einem Modulblock (2,2') und einem Konstruktionsprofil (23) herzustellen, welches eine entsprechend dimensionierte und parallel ausgerichtete T-förmige Nut (7) aufweist.

Die Doppel-T Passage (103) ist durch die Freiräume (16) der zwei benachbart angeordneten T-förmigen Nuten (7) sowie die Durchgänge (16) zwischen deren Kragenleisten (10) gebildet. Der Nachbar-Verbinder (101, 102) weist mindestens ein Spannmittel (104, 105) auf, das durch ein Werkzeug betätigbar ist, das in der Doppel-T Passage (103) geführt werden kann. Ein solches Werkzeug kann beispielsweise ein Schraubenzieher sein und das Spannmittel (104,105) kann beispielsweise eine Schraube sein. Die Nachbar-Verbinder (101,102) gemäß der vorliegenden Offenbarung haben also den Vorteil, dass sie betätigt werden können, ohne eine zusätzliche Öffnung in der rückwärtigen Wandung einer der T-förmigen Nuten (7) erzeugen zu müssen.

Der Nachbar-Verbinder (101, 102) umfasst zwei Klemmkörper (106, 107), die bei Betätigung des mind. einen Spannmittels (104, 105) an die jeweiligen Innenseiten der Kragenleisten (10) der benachbarten T-förmigen Nuten (7) anlegbar sind, um diese miteinander zu fixieren. Die Fixierung ist bevorzugt lösbar und erfolgt durch Aufbringen einer Zugkraft, welche die Kragenleisten der benachbarten T-förmigen Nuten (7) aneinanderpresst.

In dem Beispiel von Figur 4 ist der Nachbar-Verbinder (101) durch zwei Scheibenelemente gebildet, die im Wesentlichen eine Querschnittsform haben, die dem Querschnitt der Doppel-T-Passage (103) entspricht, wobei die Scheiben bevorzugt um ein Toleranzmaß gegenüber der Kontur der Doppel-T Passage (103) verkleinert sind. Anstelle von Scheiben können auch andere Körperformen wie beispielsweise Blöcke vorgesehen sein.

An der unteren Scheibe sind Gewindebohrungen vorgesehen, in welche die (hier als Schrauben ausgebildeten Spannmittel (104)) einsetzbar sind. In der oberen Scheibe sind Öffnungen vorgesehen, durch welche die Spannmittel (104) hindurchgesteckt sind. Diese Öffnungen haben eine solche relative Positionierung zu den Gewindebohrungen und eine solche Formgebung, dass die Scheiben (106) beim Festziehen der Spannmittel (104) relativ zueinander derart verschoben werden, dass sie die Kragenleisten (10) zwischen sich einklemmen.

Der Nachbar-Verbinder (102) gemäß dem Beispiel von Figur 5 hat einen anderen Aufbau. Er umfasst zwei Klemmkörper (107), die bevorzugt als Nutensteine (9) ausgebildet sind und entlang einer gemeinsamen Achse derart geführt sind, dass sie aneinander angenähert oder voneinander entfernt werden können. Die Führung ist in Figur 5 durch eine Strich-Punkt-Linie angedeutet. Weiterhin weist der Nachbar-Verbinder (102) einen zusätzlichen Führungsmechanismus auf, der durch das Spannmittel (105) betätigbar ist und eine relative Annäherung der Klemmkörper (107) bewirkt. In dem Beispiel von Figur 5 ist dieser Führungsmechanismus durch zwei an den Längsseiten der Klemmkörper (7) angeordnete Führungsbügel gebildet, die jeweils mit Anlaufschrägen im Kontakt mit den rückwärtigen Kanten der Klemmkörper (107) stehen, so dass bei einer Annäherung der Führungsbügel die Klemmkörper (107) zueinander hin gedrängt werden.

Der Kastenprofilkörper (8) (vgl. erneut Figuren 3 bis 7) weist bevorzugt mind. einen Befestigungskanal (18) auf, der den Kastenprofilkörper (8) in der Längsrichtung (Z) durchdringt. Der Befestigungskanal (18) kann eine beliebige Ausbildung haben. Er ist bevorzugt an der Innenseite mind. einer Außenwandung des Kastenprofilkörpers (8) angeordnet. Besonders bevorzugt hat der Befestigungskanal (18) die Form eines Tunnels oder einer Kederführung. In den Figuren ist ausschließlich die Ausbildung als Kederführung gezeigt, da sie verschiedene Zusatzvorteile bietet. Alternativ können andere Querschnittsformen für einen Befestigungskanal vorgesehen sein, beispielsweise ein geschlossener Kreisring-Querschnitt. Die Form einer Kederführung ist eine bevorzugte Ausführung.

Der Befestigungskanal (18) kann zumindest bereichsweise ein Innengewinde aufweisen und einen Schraubkanal (13) bilden. Das Innengewinde kann vorgefertigt sein, durch den Anwender mit einem Werkzeug geschaffen werden oder durch eine Schraube beim Eindrehen erzeugt werden, was eine besonders kostengünstige und schnelle Montage gestattet.

Der Befestigungskanal kann weiterhin als ein Bestandteil der Komponentenaufnahme (14) dienen. Insbesondere kann ein Befestigungsmittel (nicht dargestellt) mit einem Kederträger oder Kederstift in der Axialrichtung (Z) in den Befestigungskanal (18) einführbar sein, um daran ein weiteres Objekt und insbesondere die elektronische Komponente (15, 15') zu befestigen.

Es ist weiterhin möglich, mehrere Befestigungskanäle (18) mit unterschiedlichen Formen vorzusehen. Es ist zwar bevorzugt, mindestens ein Befestigungskanal (18) auf der Innenseite des Kastenprofilkörpers (8) anzuordnen. Allerdings ist es möglich, einen oder mehrere Befestigungskanäle (nicht dargestellt) alternativ oder zusätzlich an einer Außenseite des Kastenprofilkörpers (18) vorzusehen.

Besonders bevorzugt ist mindestens ein Befestigungskanal (18) in einer Querrichtung (X, Y) benachbart zu einer T-förmigen Nut (7) vorgesehen. Der mindestens eine Befestigungskanal (18) kann insbesondere an einem Wandungsteil der T-förmigen Nut (7) angeordnet sein, der einen neben der Mittellinie (M) liegenden und in Querrichtung (X, Y) äußeren Abschnitt der Rückwand bildet.

Weiterhin bevorzugt ist je ein Befestigungskanal (18) auf gegenüberliegenden Seiten (und mit einheitlichen Abständen gegenüber der Mittellinie (M)) der T-förmigen Nut (7) vorgesehen. Mit anderen Worten sind bevorzugt symmetrisch zu Mittellinie (M) einer T-förmigen Nut (7) ein linker und rechter Befestigungskanal (18) vorgesehen. Auf diese Weise wird eine einheitliche Schnittstelle geschaffen, die für die Befestigung beliebiger weiterer Komponenten an dem Kastenprofilträger (7) einzeln oder in einer Kombination mit Ausnutzung der T-förmigen Nut (7) nutzbar ist. Weiterhin wird eine einheitliche lokale Befestigungsgeometrie an den Stirnenden des Kastenprofilkörpers (8) zu mehreren und bevorzugt zu allen T-förmigen Nuten (7) erzeugt. Diese Schnittstellengeometrie ist sowohl für die Befestigung der Deckplatten (4, 5) als auch als Bestandteil der Komponentenaufnahme (14) nutzbar.

Bevorzugte Ausführungen der Deckplatten (4,5) sind in den Figuren 3, 8 und 9 gezeigt. Eine Deckplatte (4), die die obere Stirnseite eines Kastenprofilkörpers (8) (im vorgesehenen Montagezustand) übergreift kann als Kopfplatte (4) gezeichnet sein, und entsprechend eine untere Deckplatte (5) als Fußplatte (5). Die in den Figuren gezeigten Ausbildungen für Kopfplatten (4) und Fußplatten (5) sind austauschbar bzw. sind deren geometrische Merkmale in beliebiger Weise kombinierbar. Es ist weiterhin möglich zwei oder mehr Deckplatten direkt benachbart zueinander anzuordnen, beispielsweise um komplexere Schnittstellen-Geometrien bereit zu stellen oder eine höhere Steifigkeit oder sonstige Belastbarkeit zu erreichen.

Eine Deckplatte (4, 5) weist bevorzugt Befestigungsöffnungen (19) auf, die mit den stirnseitigen Enden von Befestigungskanälen (18) des Kastenprofilkörpers (8) fluchten, so dass zumindest eine Deckplatte (4, 5) durch Befestigungsmittel (20), insbesondere Schrauben, die in mindestens zwei der Befestigungskanäle (18) einbringbar sind, an dem Kastenprofilkörper (8) befestigbar und/oder positionierbar sind. Für die Positionierung können alternativ oder zusätzlich Stifte in einen Teil der Befestigungsöffnungen (19) und Befestigungskanäle (18) eingebracht werden. Mit anderen Worten weist mindestens eine Deckplatte (4, 5) eine Mehrzahl von Befestigungsöffnungen (19) auf, deren Lochbild mit der Anordnung von mehreren Befestigungskanälen (18) an dem Kastenprofilkörper (8) korrespondiert, so dass eine positionierende Schnittstellen-Geometrie erzeugt ist.

Eine Deckplatte (4,5) hat weiterhin bevorzugt eine Außenkontur, die Längskanten (50) aufweist, wobei der Verlauf der Längsseiten (50) mit der Außenkontur des Kastenprofilkörpers (8) im Bereich der Querseiten (QX, QY) fluchtet.

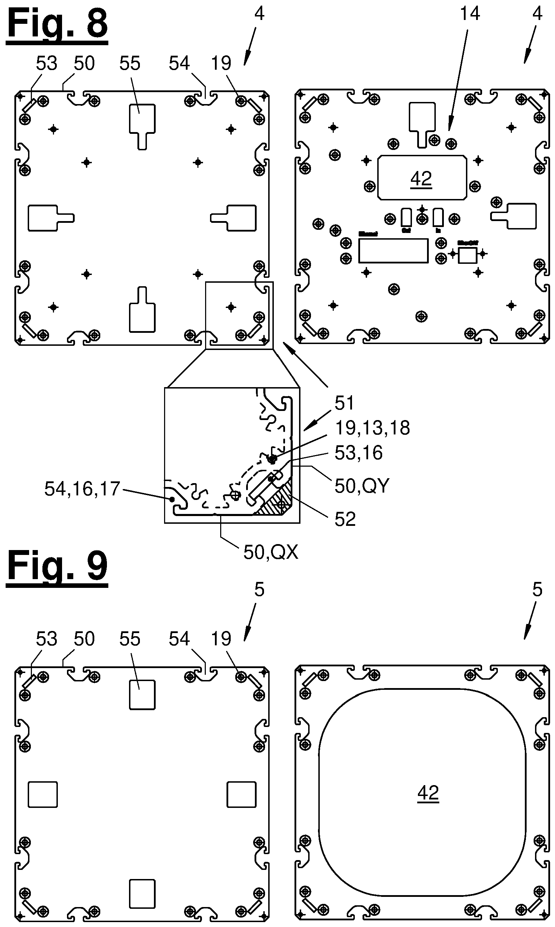

Alternativ oder zusätzlich hat eine Deckplatte (4, 5) bevorzugt eine Außenkontur, die zwischen den Längskanten (50) liegende Eckbereiche (51) aufweist, und wobei die Eckbereiche (51) über die Außenkontur einer Stirnseite des Kastenprofilkörpers (8) im Kantenbereich (K) nach außen überstehen. Die Eckbereiche (51) bilden mit anderen Worten jeweils einen Ecküberstand (52) gegenüber der Außenkontur des Kastenprofilkörpers (8). Dieser Ecküberstand (52) an den Eckbereichen (51) der Deckplatten (4, 5) ist in der vergrößerten Detailansicht von Figur 8 sowie am linken Ende der Deckplatte (4) in Figur 3 schraffiert hervorgehoben. Der Ecküberstand (52) kann für verschiedene Zwecke vorteilhaft genutzt werden.

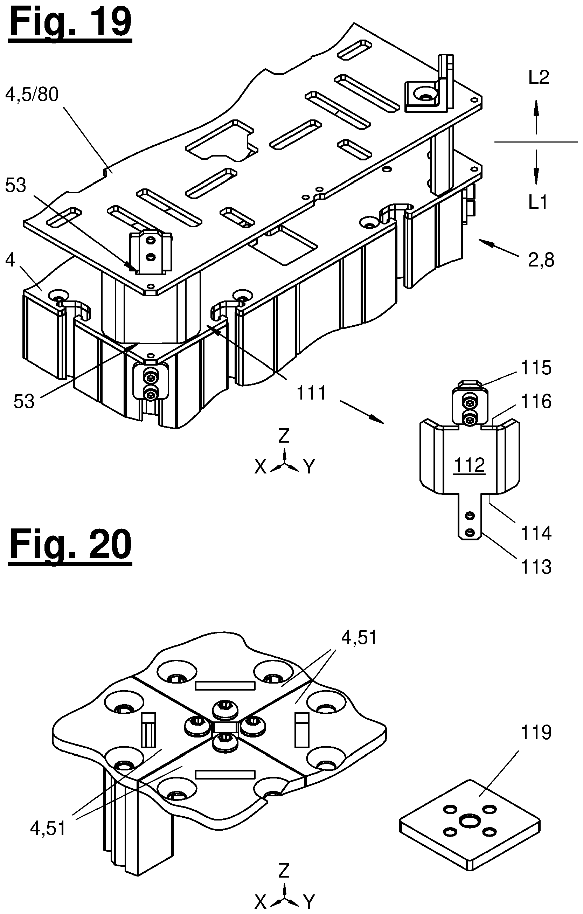

Einerseits können die Ecküberstände (52) zur relativen Ausrichtung von einem Modulblock (2) mit einem benachbarten Bestandteil des Modul-Bausatzes (100) genutzt werden, insbesondere zur ko-planaren Ausrichtung mit einem benachbarten Modulblock (2'). Figur 20 zeigt beispielhaft vier direkt zueinander benachbarte Modulblöcke (2, 2'), die im Bereich der Ecküberstände (52) mit einer Verbindungsscheibe (119) untereinander fixiert sind, wobei die Verbindungsscheibe (119) jeweils körperlich an jedem der Ecküberstände (52) anliegt, so dass die Deckplatten (4) in einer gemeinsamen Höhenlage ausgerichtet sind.

Weiterhin können die Ecküberstände (52) als Angriffspunkt für Manipulatoren oder Greifwerkzeuge bei der Herstellung eines Modulblocks (2, 2') dienen. Weiter unten wird erläutert, dass die Ecküberstände (52) vorteilhaft nutzbar sind, um dort Stapel-Verbinder zu befestigen. Für diesen und andere Zwecke kann im Eckbereich (51) ein Durchbruch (53) vorhanden sein.

Eine Deckplatte (4, 5) weist bevorzugt benachbart zu einem Eckbereich (51) einen Durchbruch (53) auf, der derart angeordnet und dimensioniert ist, dass er im vorgesehenen Montagezustand mit dem Freiraum (16) einer T-förmigen Nut (7) überlappt, die im Kantenbereich (K) des Kastenprofilkörpers (8) angeordnet ist. Eine solche T-förmige Nut (7) wird im Weiteren zur vereinfachten Unterscheidung als Kantenlängsnut (11) bezeichnet, während eine T-förmige Nut (7), die an einer Querseite (QX, QY) des Kastenprofilkörpers (8) angeordnet ist, als eine Seitenflächen-Längsnut (12) bezeichnet werden kann.

In der vergrößerten Detaildarstellung in Figur 8 ist die Überlappung zwischen dem Durchbruch (53) und dem Freiraum (16) der darunterliegenden Kanten-Längsnut (11) in einer Draufsicht gezeigt. Der Durchbruch (53) kann eine beliebige Formgebung haben. Gemäß der in den Zeichnungen dargestellten bevorzugten Variante hat er eine rechteckige Querschnittsform. Alternativ kann auch eine quadratische Form, eine Dreieckform oder eine Kreissegmentform vorgesehen sein.

Durch den Durchbruch (53) wird ein Zugang in der Längsrichtung (Z) zu der T-förmigen Nut (7) geschaffen. Durch den Durchbruch (53) sind beispielsweise Werkzeuge oder Befestigungsmittel einführbar.

Eine Deckplatte (4, 5) kann ferner an einer Längskante (50) mindestens eine Randaussparung (54) aufweisen, die derart angeordnet und dimensioniert ist, dass die Randaussparung (54) im vorgesehenen Montagezustand mit dem Freiraum (16) einer T-förmigen Nut (7) sowie dem Durchgang (17) zwischen den Kragenleisten (10) dieser T-förmigen Nut (7) fluchtet. Die Randaussparung (54) kann beispielsweise eine Halbkreisform oder eine Rechteckform haben. Besonders bevorzugt ist die Randaussparung (54) T-förmig ausgebildet und weist im Wesentlichen dieselbe Kontur auf, wie der Querschnitt der T-förmigen Nut (7). Die Formkorrespondenz zwischen der Aussparung (54) und der T-förmigen Nut (7) ist in der vergrößerten Darstellung in Figur 8 sichtbar.

Mit anderen Worten weist eine Deckplatte (4,5) an einer Längskante (50) mindestens eine Randaussparung (54) auf, die dazu ausgebildet ist, im vorgesehenen Montagezustand einen freien Zugang zum Einführen eines Befestigungsmittels oder Werkzeugs in die Stirnöffnung einer T-förmigen Nut (7) zu gestatten, die an einer Querseite (QX, QY) des Kastenprofilkörpers (8) angeordnet ist.

Ein weiterer Aspekt der vorliegenden Offenbarung der für sich allein oder in Kombination mit den anderen Aspekten nutzbar ist, betrifft einen Profilaufsatz (30) für einen Modulblock (2, 2').

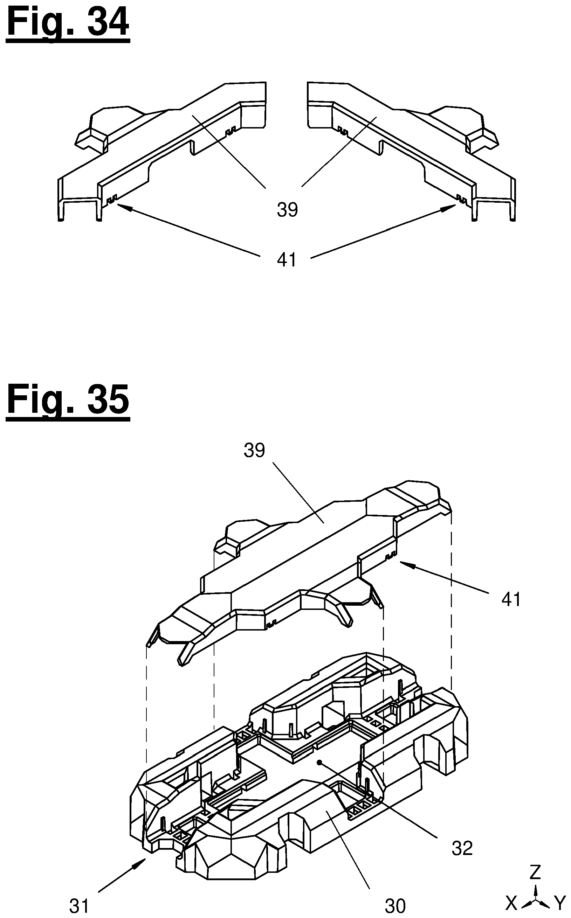

Bevorzugte Ausführungen des Profilaufsatzes (30) sind in den Figuren 3, 14 und 32 bis 35 gezeigt.

Der Profilaufsatz (30) ist bevorzugt an einer Außenseite eines Modulblocks (2, 2') und insbesondere an einer offenen Stirnseite (O) des Kastenprofilkörpers (8) oder an einer Deckplatte (4,5) anordenbar und befestigbar. Im Weiteren wird davon ausgegangen, dass ein Profilaufsatz (30) an der Außenseite einer Kopfplatte (4) angeordnet und insbesondere befestigt ist. Alternativ kann die Befestigung des Profilkörpers an dem Kastenprofilkörper (8) vorliegen.

Der Profilaufsatz (30) kann an einem Vollformat-Block oder einen Halbformat-Block (25) angepasst sein. Ein Profilaufsatz (30) kann an einem aktiven Modulblock (2, 2'), der eine elektronische Komponente (15) umfasst, sowie an einem passiven Modulblock (2') ohne elektronische Komponente (15, 15') angeordnet sein.

Der Profilaufsatz (30) gemäß der vorliegenden Offenbarung ist bevorzugt als im Wesentlichen ringförmiger Körper mit einer flachen Unterseite zur Kontaktierung mit der Deckplatte (4,5) unter dem Kastenprofilkörper (8) ausgebildet. Der Profilaufsatz (30) weist bevorzugt einen kragenförmig umlaufenden Kabelführungskanal (31) auf, der eine Mittelöffnung (32) umgibt. Sowohl der Kabelführungskanal (31) als auch die Mittelöffnung (32) können durch Abdeckungen verschließbar sein, die bevorzugt eine korrespondierende Formgebung haben. Es kann eine ein- oder mehrteilige Kabelkanalabdeckung (39) vorgesehen sein, die zur Überdeckung der Stirnöffnung eines Kabelführungskanals (31) an dem Profilaufsatz (30) lösbar befestigbar ist. Weiterhin kann eine Abdeckkappe (40) vorgesehen sein, die zur Überdeckung einer Mittelöffnung (32) an dem Profilaufsatz (30) lösbar befestigbar ist. Die Befestigung kann auf beliebige Weise erfolgen, beispielsweise durch Formschluss oder Kraftschluss. Besonders bevorzugt ist eine Rastbefestigung (41) vorgesehen. Bevorzugte Ausführungsvarianten der Kabelkanalabdeckung (39) und der Abdeckkappe (40) sind in den Figuren 3, 34 und 35 gezeigt.

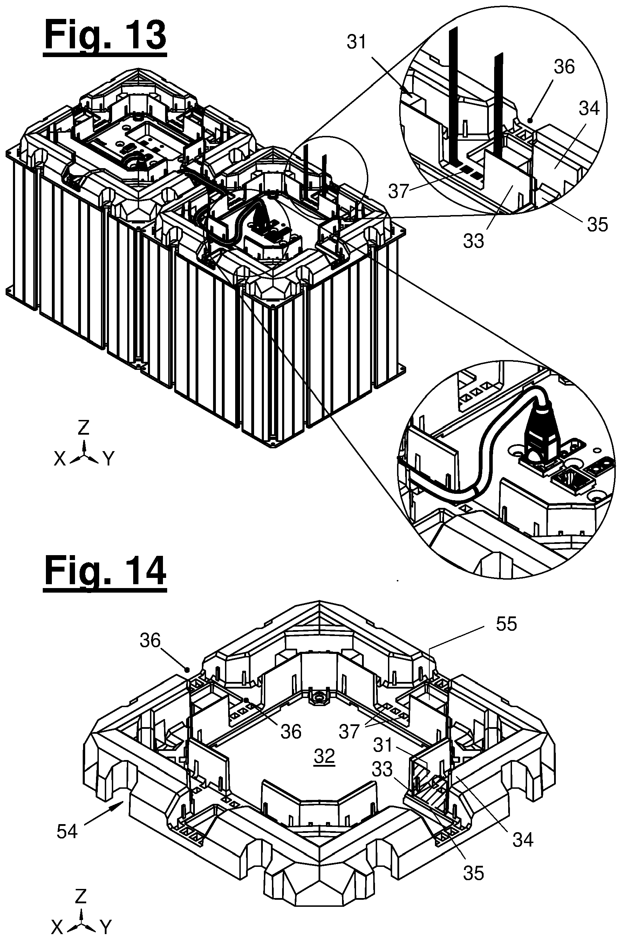

Der Kabelführungskanal (31) hat bevorzugt eine halb offene Kanalform mit einer Bodenwandung (35), einer zur Innenseite des Modulblocks (2) bzw. zur Mittelöffnung (32) hin angrenzende Querwandung (33) sowie eine zur Außenseite hin angrenzende Querwandung (34). In Figur 14 ist der Querschnitt des Kabelführungskanals (31) mit den angrenzenden Wandungen (30, 34, 35) als schraffierte Fläche gezeigt. Er ist nach oben hin halboffen.

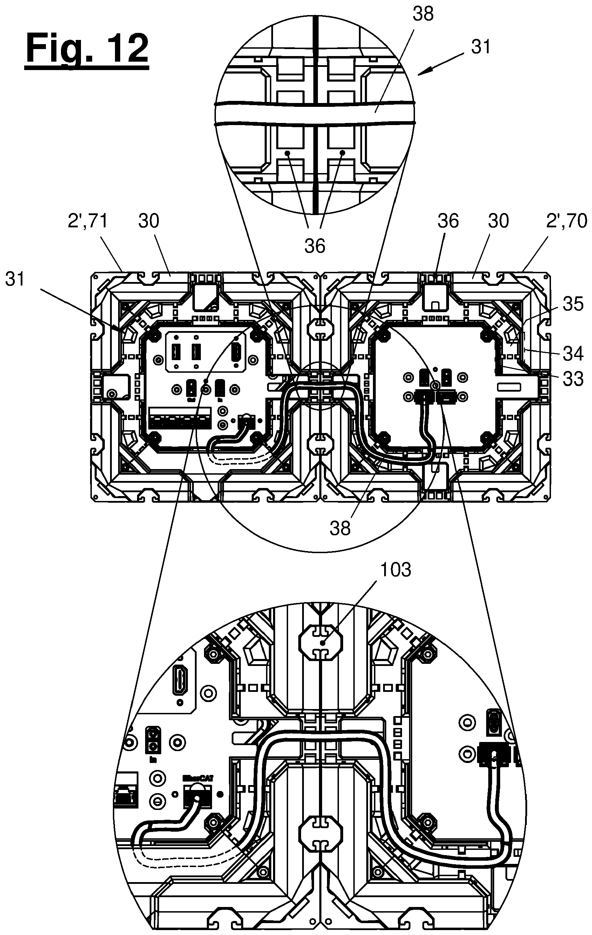

Die Querwandungen (33, 34) bilden bevorzugt Wandungen eines Ringkanals. Zu mind. einer Querseite (QX,QY) des Modulblocks (2) und/oder zur Mittelöffnung (32) hin können allerdings bevorzugt Aussparungen (36) in der inneren Querwandung (33) und/oder der äußeren Querwandung (34) vorgesehen sein, durch welche ein Kabel oder eine Leitung (38) von einem Kabelführungskanal (31) eines ersten Modulblocks (2) in einen Kabelführungskanal (31) eines benachbarten Modulblocks (2) führbar ist. Ein Beispiel für eine solche Kabelführung ist in den Figuren 12 und 13 gezeigt. In einer Bodenwandung (35) des Kabelführungskanals (31) bzw. in einer Bodenwandung (35) des Profilkörpers (30) können eine oder mehrere Bandführungen (37) vorgesehen sein. Derartige Bandführungen (37) können sich weiterhin im Bereich der Aussparungen (36) befinden (vgl. vergrößerte Darstellung oben in Figur 12). Die Bandführungen (37) sind bevorzugt dazu ausgebildet, ein Fixiermittel mit einer Strang- oder Bandform, insbesondere einen Kabelbinder, derart hindurchzuführen, dass er eine im Kabelführungskanal (31) oder im Bereich der Aussparung (36) eingelegte Leitung (38) u-förmig umgreift. Die vergrößerte Detaildarstellung rechts oben in Figur 13 illustriert einen Kabelbinder, der u-förmig durch eine Bandführung (37) geführt ist.

Die Mittelöffnung (32) des Profilaufsatzes (30) gestattet bevorzugt einen Zugriff zu der Deckplatte (4,5) und/oder zu dem Hohlraum (6) im inneren des Kastenprofilkörpers (8). Entsprechend kann eine Deckplatte (4) und insbesondere eine Kopfplatte (4), eine im Mittelbereich liegende Öffnung (42) aufweisen, die mit der Mittelöffnung (32) des Profilaufsatzes (30) fluchtet. Die mittlere Öffnung (42) und die Mittelöffnung (32) können dabei dieselbe oder unterschiedliche Formgebungen haben. Es ist weiterhin möglich, dass eine Deckplatte (4,5) ohne eine mittlere Öffnung ausgebildet ist, was beispielsweise bei einem passiven Modulblock oder bei einem solchen Modulblock sinnvoll ist, bei dem die Deckplatte (4,5) eine hohe mechanische Belastbarkeit aufweisen muss.

Eine Deckplatte (4,5), insbesondere eine Kopfplatte (4), und/oder der Profilaufsatz (30) können auf jeweils mind. eine Portöffnung (55, 55') aufweisen, wobei die Portöffnung (55) am Profilaufsatz (30) im vorgesehenen Montagezustand mit einer Portöffnung (55`) an der Deckplatte (4, 5) fluchtet und wobei weiterhin die Portöffnung (55) am Profilaufsatz (30) in der Bodenwandung (35) des Kabelführungskanals (31) angeordnet ist. Die Portöffnungen (55, 55') können somit eine alternative Zugangsmöglichkeit zum Hohlraum (2) des Modulblocks (2) bzw. des Kastenprofilkörpers (8) bilden.

Je nach Ausführungsform des Modulblocks (2) können an der Deckplatte (4,5) nur eine oder mehrere Portöffnungen (55`) oder nur eine oder mehrere mittlere Öffnungen (42) oder eine beliebige Kombination davon vorgesehen sein.

Der Profilaufsatz (30) kann gemäß einer bevorzugten Ausführungsvariante als ein Standardteil ausgebildet sein, das sowohl die Mittelöffnung (32) als auch eine oder mehrere Portöffnungen (55) umfasst. In einem solchen Fall ist also für eine Funktionsanpassung eines Modulblocks (2) lediglich eine Anpassung der Deckplatte (4,5) erforderlich, während ein Profilaufsatz (30) einheitlich für alle Modulblöcke (2) desselben Formats verwendbar ist. Alternativ ist es möglich, für einzelne oder alle Modulblöcke (2) jeweils einen angepassten Profilaufsatz (30) vorzusehen, der nur die im jeweiligen Fall erforderlichen Öffnungen (32,55) aufweist.

Die Portöffnung (56) am Profilkörper (30) ist weiterhin bevorzugt benachbart zu mind. einer Aussparung (36) in einer Querwandung (33, 34) des Kabelführungskanals (31) angeordnet. Gemäß einer besonders bevorzugten Ausführung sind an jeder Längsseite des Kabelführungskanals (31) in der Mitte der Bodenwandung (35) und fluchtend zu den links und rechts dazu liegenden Aussparungen (36) je eine Portöffnung (55) vorgesehen. Auf diese Weise wird an jeder Querseite (QX, QY) eine Verzweigungsmöglichkeit geschaffen, um eine Leitung oder ein Kabel (38) zur Mittelöffnung (32) hin, in den Hohlraum (2), zu einem benachbarten Modulblock (2) hin oder durch einen Abschnitt des Kabelführungskanals (31) zu verlegen.

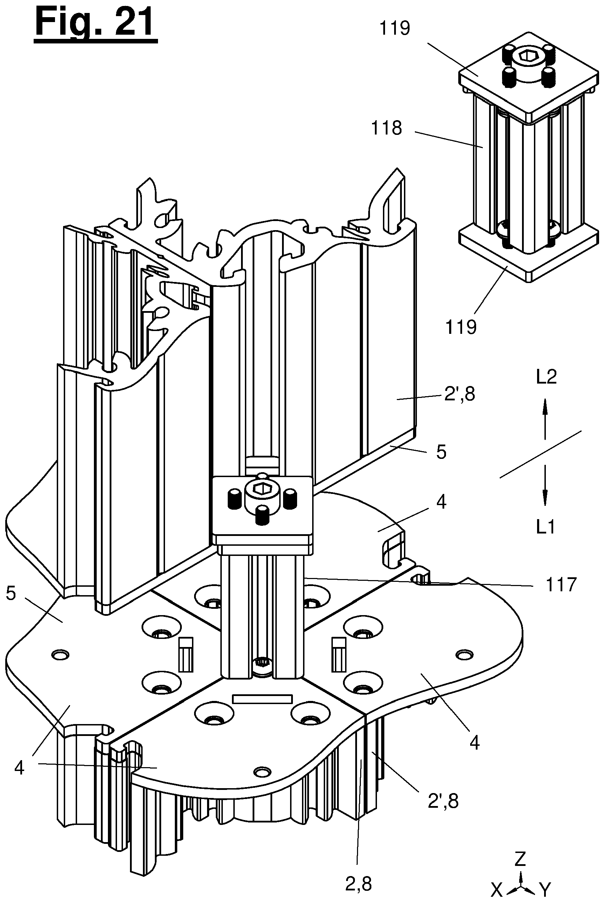

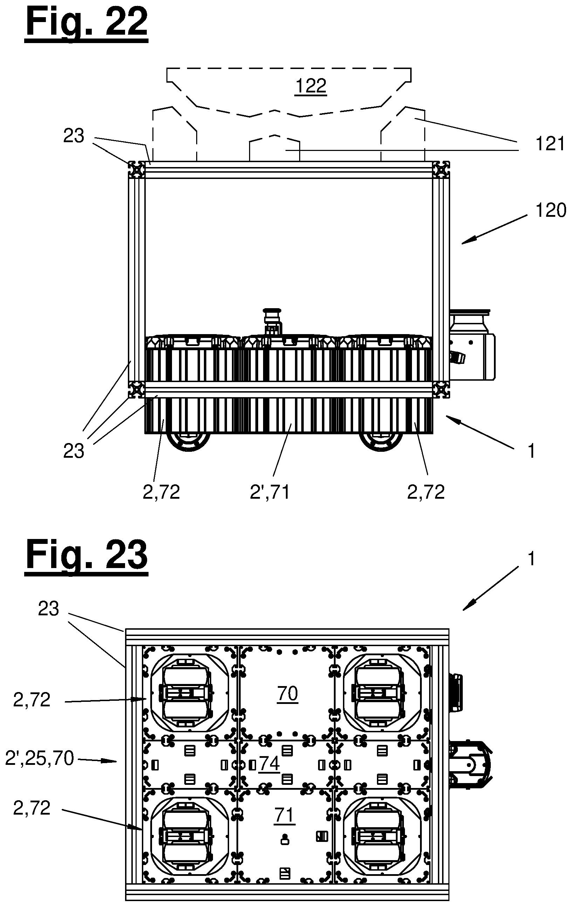

Der Modulbausatz (100) gemäß der vorliegenden Offenbarung ist besonders dafür geeignet, ein Roboterfahrzeug oder Logistikfahrzeug (1) zu bilden, dass die Basis für ein freikonfigurierbares Flurförderfahrzeug bildet. Hierzu kann an den ein oder mehreren Modulblöcken (2) ein beliebiger Tragaufbau (120) befestigt werden, der insbesondere aus in der Praxis bereits häufig verwendeten Konstruktionsprofilen (23) mit einer beliebigen Geometrie herstellbar ist. Figuren 22 und 23 zeigen das Roboterfahrzeug (1) gemäß Figur 1 in einer Seitenansicht und Unteransicht, wobei an dem Fahrzeug (1) zusätzlich ein quaderförmiger Tragaufbau (120) befestigt ist, der beispielsweise eine angepasste Aufnahme (121) für ein zu förderndes Werkstück (122) trägt. Durch die T-förmigen Nuten (7) an den Kastenprofilkörpern (8) ist ein Tragaufbau (120) bzw. ein Konstruktionsprofil (23) sowohl über die Nachbar-Verbinder (101,102) gemäß der vorliegenden Offenbarung, als auch über Standardbefestigungsmittel wie beispielsweise die in Figur 21 gezeigten Winkelbeschläge (21), Nutensteine (9) und Schrauben oder Nietverbindungen miteinander verbindbar. Die Verbindung ist dabei mit Standardwerkzeugen sowie in lösbarer Form möglich, ohne dass es einer spanenden Bearbeitung an den Modulblöcken (2) bedarf.

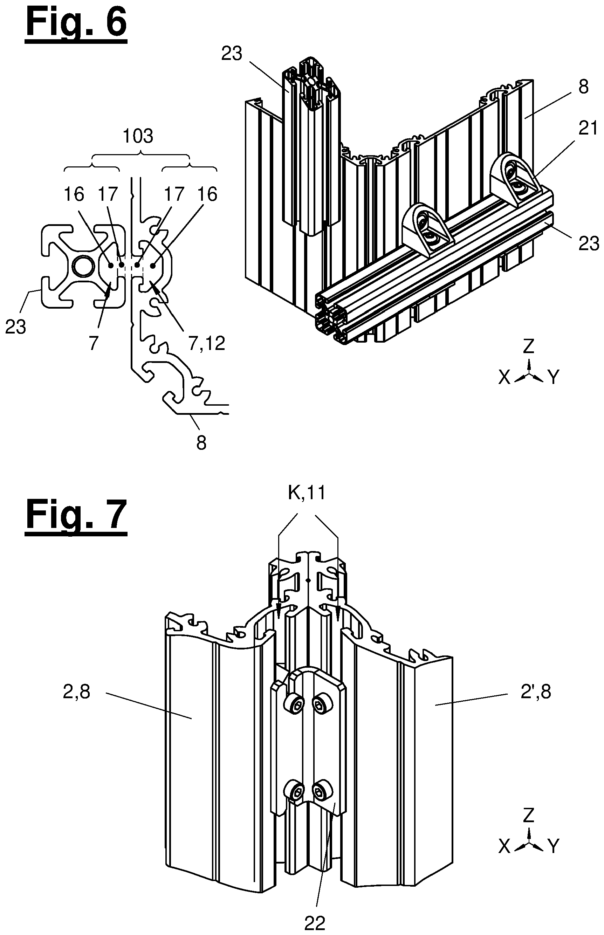

Weiterhin sind auch benachbarte Modulblöcke (2) beispielsweise an den Kantenbereichen (K) über StandardBefestigungsmittel wie beispielsweise den in Figur 7 gezeigten Winkelbeschlag (22), Nutensteine (9) und Schrauben miteinander verbindbar. Der Modulbausatz (100) ist somit besonders für einen schnellen und universellen Einsatz im Industriebetrieben geeignet und kann dort direkt mit bereits bestehenden Aufbauten, Tragsystemen oder Prototypen kombiniert werden, die bereits auf einem etablierten System mit Konstruktionsprofilen (23) beruhen. Durch die standardisierten geometrischen Schnittstellen sind weiterhin mehrlagige Konstruktionen und Sensorausstattungen für komplexe Antriebskonzepte möglich.

Jeder der Modulblöcke (2) umfasst bevorzugt eine Komponentenaufnahme (14), die an der mindestens einen Deckplatte (4, 5) und/oder an der Innenseite des Kastenprofilkörpers (8) angeordnet oder durch diese gebildet ist. Die Komponentenaufnahme (14) kann dabei insbesondere eine in der vorgesehenen Montageposition am oberen Ende des Kastenprofilkörpers (8) angeordnete Kopfplatte (4) und/oder eine in der vorgesehenen Montageposition am unteren Ende des Kastenprofilkörpers (8) angeordnete Fußplatte (5) und/oder ein oder mehrere Befestigungskanäle (18) an der Innenseite des Kastenprofilkörpers (8) umfassen. Die Komponentenaufnahme (14) ist derart ausgebildet, dass eine daran befestigte elektronische Komponente (15) zumindest anteilig in dem Hohlraum (6) des Kastenprofilkörpers (8) angeordnet ist. Je nach der Funktion des Modulblocks (2) kann eine Fußplatte (5) vorgesehen oder weggelassen sein. Die Fußplatte (5) kann weiterhin eine geschlossene Oberfläche oder eine mittlere Öffnung (42) aufweisen.

Die Deckplatten (4, 5) sind bevorzugt aus einem mechanisch belastbaren Material, insbesondere aus einem Metall gefertigt und tragen im Zusammenwirken mit den Außenwandungen des Kastenprofilkörpers (8) dazu bei, dass das Gehäuse des Modulblocks (2) insgesamt eine hohe Festigkeit, Verwindungssteifigkeit und Formstabilität hat. Ein Modulkörper (2) kann beispielsweise dazu geeignet sein, ein Gewicht von deutlich über 500kg abzustützen.

Ein weiterer eigenständiger Aspekt der vorliegenden Offenbarung besteht darin, einen Modulblock (2) mit einem Kastenprofilkörper (8) und mindestens einer Deckplatte (4, 5) bereitzustellen, wobei ein steuerbarer Radantrieb (60) oder mindestens ein nicht-angetriebenes Rad (63) in einem Hohlraum (6) des Kastenprofilkörpers (8) angeordnet ist und in der vorgesehenen Montageposition nur teilweise nach unten aus dem Modulblock (2) herausragt. Auf diese Weise stellt der Kastenprofilkörper eine schützende Einhausung für ein Rad und bevorzugt je ein Kastenprofilkörper eine schützende Einhausung für jedes Rad eines Roboter- oder Logistikfahrzeugs (1) dar, das aus dem Modulblöcken (2, 2') gebildet wird. Weiterhin kann eine Antriebssteuerung oder Bewegungsteuerung für einen Roboter- oder Logistikfahrzeug (1) deutlich einfacher konzipiert werden, weil die wesentlichen Außenmaße des Fahrzeugs durch die Außenwandungen der Kastenprofilkörper (8) und damit bevorzugt als Vielfache des Einheitsmaßes (E) vorgegeben sind. Weiterhin ist es vorteilhaft, dass alle Radaufstandspunkte eines Roboter- oder Logistikfahrzeugs (1) innerhalb der Außenkonturen des Fahrzeugs (1) liegen.

Dies gilt insbesondere für Steuertechniken, die für eine teil- oder vollautonome Bewegungsführung eines Roboter- oder Logistikfahrzeugs (1) vorgesehen sind.

Ein Modul- Bausatz (100) gemäß der vorliegenden Offenbarung kann mind. einen und bevorzugt mehrere der offenbarten aktiven Modulblöcke (2) umfassen, d.h. ein Energiespeicher-Block (70) und/oder ein Steuertechnik-Block (71) und/oder einen Antriebs-Block (72) und/oder einen Kommunikations-Bock (73) und/oder einen Sensor-Block (74).

Alternativ oder zusätzlich kann der Modul-Bausatz mind. einen passiven Modul-Block (2) umfassen, beispielsweise einen Passivrad-Block (75), der mind. ein nicht-angetriebenes Rad umfasst.

Das nicht-angetriebene Rad (63) kann dabei auf beliebige Weise an dem Passivrad-Block (75) angeordnet sein. Es kann ein lenkbares oder ein nicht-lenkbares Rad sein bzw. eine lenkbare oder eine starre Radachse aufweisen. Besonders bevorzugt kann ein nicht-angetriebenes Rad (63) eine omnidirektionale Bewegung unterstützen. Das nicht-angetriebene Rad (63) kann dabei an einem passiven Radträger (62) angeordnet sein, der wiederum beweglich an dem Modulblock (2) und insbesondere an einer Deckplatte (4) befestigt ist. Der passive Radträger (62) kann insbesondere ein Nachlaufkäfig sein, bei dem die Radachse des nicht-angetriebenen Rads (63) windschief zu einer im Wesentlichen vertikalen Drehachse des Radträgers (62) angeordnet ist.

Ein Passivrad-Block (75) kann in Kombination mit einem nicht-angetriebenen Rad auf eine elektronische Komponente (15) aufweisen, die ein Bewegungserfassungsmittel zur Erfassung der Bewegung des nicht-angetriebenen Rads (63) beinhaltet oder ist. In diesem Fall kann ein Passivrad-Block (75) dennoch ein aktiver Modulblock (2) mit einer elektronischen Komponente (15) sein. Ein solcher aktiver Passivrad-Block (75) ist in Figur 25 gezeigt.

Mehrere Stapel-Lagen (L1, L2) mit Bestandteilen der Modul-Bausatzes (100) können auf beliebige Weise miteinander verbunden werden. Besonders bevorzugt umfasst der Modulbausatz (100) einen Stapelverbinder (111,117) gemäß einem der Beispiele in Figuren 19 und 21.

Ein Stapel-Verbinder (111,117) ist dazu vorgesehen und ausgebildet, mit einem ersten Modulblock (2) in einer ersten Stapellage (L1) und weiterhin mit einem Nachbarobjekt in einer darüber oder darunter befindlichen Stapellage (L2) lösbar fixiert zu werden.

Ein Stapel-Verbinder (111,117) wird dazu insbesondere bevorzugt an mind. einem Ecküberstand (52) im Eckbereich (51) einer Deckplatte (4,5) befestigt.

Figur 19 zeigt eine erste bevorzugte Ausführungsvariante eines Stapel-Verbinders (111) gemäß der vorliegenden Offenbarung. Der Stapel-Verbinder (111) weist einen Distanzabschnitt (112) und eine oder zwei Befestigungslaschen (113,115) auf. Wenn zwei Befestigungslaschen (113,115) vorliegen, sind diese bevorzugt an gegenüberliegenden Seiten des Distanzabschnitts (102) angeordnet und stehen über den Distanzabschnitt (112) über. Zwischen dem Distanzabschnitt (112) und der ersten Befestigungslasche (113) ist eine Schulter (114) gebildet, die als Anlagekante für eine körperliche Abstützung dienen kann. Der Stapel-Verbinder (111) ist mit der ersten Befestigungslasche (113) in einem Durchbruch (53) an einer Deckplatte (4,5) eines ersten Modulblocks (2) einsetzbar. Dabei liegt die Schulter (114) an der Oberfläche dieser Deckplatte (4,5) formschlüssig an und stützt sich dort ab.

Gemäß einer bevorzugten Ausführung ist auch zwischen dem Distanzabschnitt (112) und der zweiten Befestigungslasche (115) eine weitere Schulter (116) gebildet. Der Stapel-Verbinder (111) kann mit der zweiten Befestigungslasche (115) in einem weiteren Durchbruch (53) an einer Deckplatte (4,5) eines benachbarten Modulblocks (2) oder in einen entsprechenden Durchbruch (53) an einer Zusatz-Trägerplatte (80) einsetzbar sein. Dabei ist die weitere Schulter (16) bevorzugt an der Oberfläche der Deckplatte (4, 5) dieses benachbarten Modulblocks (2) oder an der Oberfläche der Zusatz-Trägerplatte (80) abstützbar.

Die Zusatz-Trägerplatte (80) kann dabei im Wesentlichen dieselbe geometrische Schnittstelle aufweisen, die oben zu den Kopf- und Fußplatten (4,5) erläutert worden ist. Sie kann allerdings im Mittelbereich abweichende Befestigungsstrukturen aufweisen, beispielsweise um daran in einer Mehrzahl von Anordnungsvarianten eine Sensor-Halterung (81, 83, 85) oder einen Befestigungsadapter (87) oder eine Display-Halterung (89) oder einen Bügelträger (110) oder eine beliebige Kombination der vorgenannten Elemente zu befestigen.

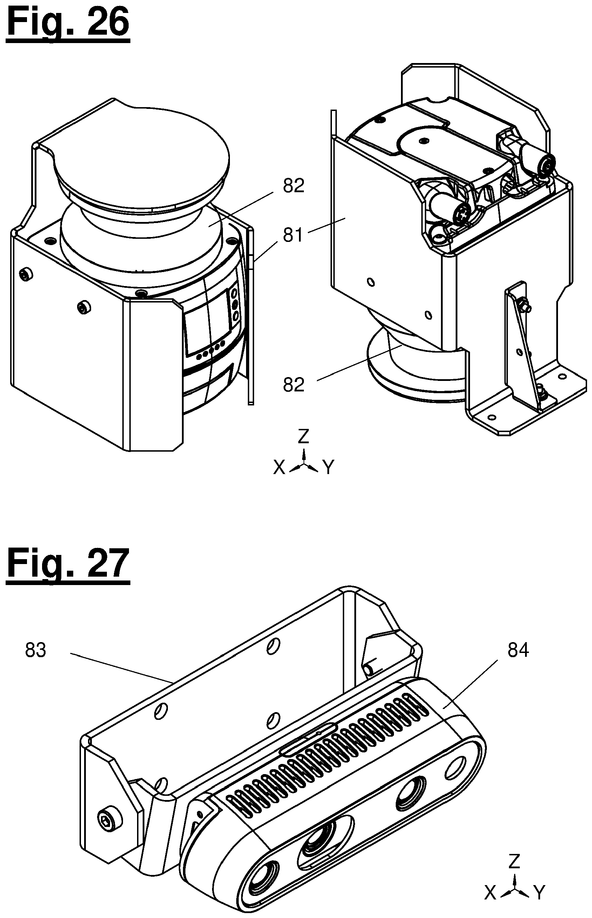

Figur 21 zeigt eine weitere bevorzugte Ausführung eines Stapel-Verbinders (117) gemäß der vorliegenden Offenbarung. Diese umfasst einen Säulenkörper (118), der an einer Mehrzahl von Ecküberständen (52) der aneinandergrenzenden Deckplatten (4, 5) von benachbarten Modulblöcken (2) abstützbar ist. Der Säulenkörper (118) kann an den Ecküberständen (52) direkt oder indirekt befestigt sein. Bevorzugt ist eine indirekte Befestigung mittels einer Verbindungsscheibe (119), die in Figur 20 separat dargestellt ist. Der Säulenkörper (118) ist besonders bevorzugt durch eine Profilstange (23) gebildet, die T-förmige Nuten (7) in den Seitenflächen aufweist. Es kann sich dabei insbesondere um ein Konstruktionsprofil (23) der 20er-Baureihe handeln. Der Säulenkörper (118) kann dabei eine beliebige Länge haben. Er kann gemäß dem Beispiel in Figur 27 den gewünschten Abstand zwischen der Oberkante einer Kopfplatte (4) der unteren Stapellage (L1) und der Unterkante einer Fußplatte (5) der darübergelegenen Stapellage (L2) entsprechen. Alternativ kann der Säulenkörper (118) bis zur Unterkante der Kopfplatten (4) der oberen Stapellage (L2) reichen. Mit anderen Worten kann der Säulenkörper (118) eine Länge haben, die der Höhe eines Modulkörpers (2) in der Längsrichtung (Z) zzgl. des gewünschten Abstands zwischen den Stapellagen (L1, L2) entspricht. Der Modul-Bausatz (100) umfasst bevorzugt mind. einen Bügelträger (110), der in den Figuren 10 und 11 beispielhaft gezeigt ist. Der Bügelträger (110) weist einen bogenförmigen Abschnitt (Mittelabschnitt) und zwei endseitige Befestigungsabschnitte auf. Der Abstand zwischen dem Befestigungsabschnitten ist dabei bevorzugt ein ganzheitliches vielfaches des Einheitsmaßes (E), nach dem die Geometrie der Modulblöcke (2) definiert ist. Der Abstand kann insbesondere genau dem Einheitsmaß (E) entsprechen.

Die Befestigungsabschnitte können eine beliebige Ausbildung haben. Besonders bevorzugt haben die Befestigungsabschnitte gabelförmig ineinander greifende Laschen, so dass ein erster Bügelträger (110) zusammen mit einem benachbarten Bügelträger (110) in gleicher Höhenlage in der selben T-förmigen Nut (7) befestigbar ist. An jeder Befestigungslasche kann eine Bohrung vorgesehen sein, durch die beispielsweise eine Schraube in einen Nutenstein (9) führbar ist, der in der T-förmigen Nut (7) einsetzbar ist.

Der Modul-Bausatz (100) kann bevorzugt ein oder mehrere Sensoren und zugehörige Befestigungsmittel umfassen, durch die der Sensor an einem Modulblock (2) oder einer Zusatz-Trägerplatte (80) befestigbar ist. Figuren 26 bis 31 zeigen hierfür beispielhaft einen LIDAR-Sensor (82) mit einer zugehörigen Sensor-Halterung (81), die eine Befestigung in einer aufrechten oder einer dazu gewendeten Position erlaubt. Figur 27 zeigt ein Beispiel für eine Time-Off-Flight-Kamera (84) mit einer Sensor-Halterung (83), die eine Einstellung des Neigungswinkels der Kamera gestattet;

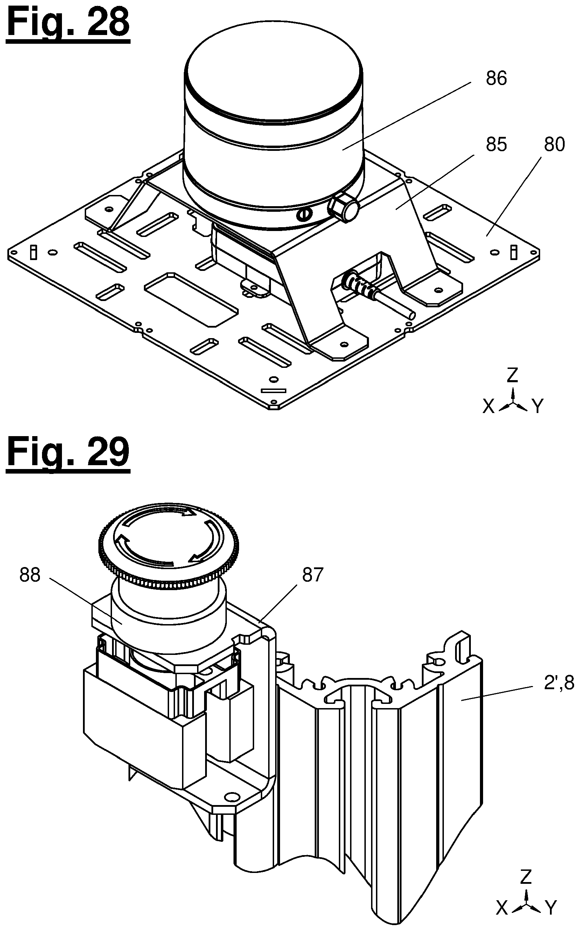

Figur 28 zeigt einen 360° Laserscanner (86), mit einer Sensor-Halterung (85), die eine Befestigung an einer Zusatz-Trägerplatte (80) oder an einer Querseite (QX, QY) eines Modulblocks (2) gestattet.

Figur 29 zeigt einen Not-Aus Knopf (88), der mit einem Befestigungsadapter (87) entweder an einer Querseite (QX, QY) eines Modulblocks (2) oder an einer Deckplatte (4, 5) (vgl. Figur 16) befestigbar ist.

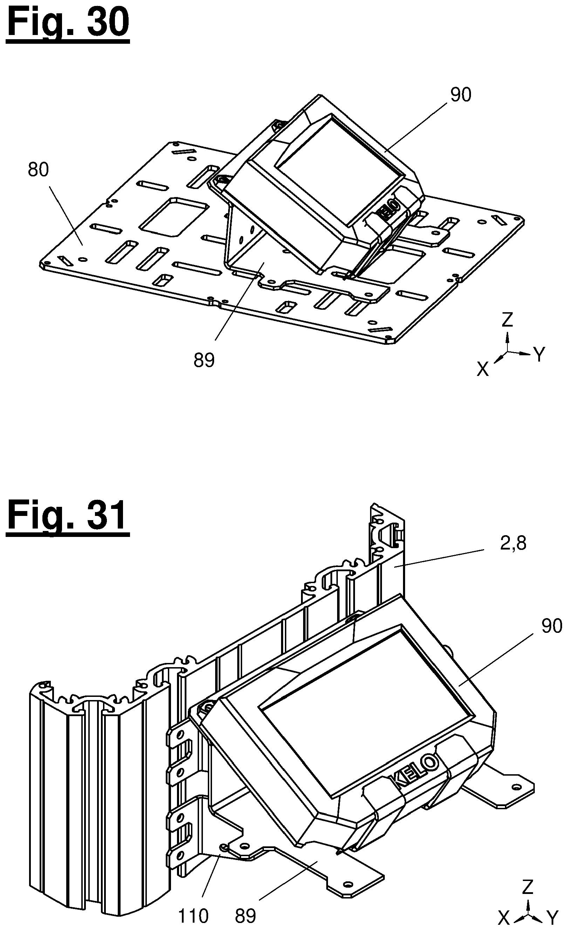

Figuren 30 und 31 zeigen ein grafisches Display (90), das mittels einer Display-Halterung (89) schräg zu den Einheitsrichtungen (X, Y, Z) orientiert an einer Zusatzträgerplatte (80) oder einem Bügelträger (110) befestigbar ist.

Die Verkabelung zwischen den Modulblöcken (2) und weiteren elektronischen Einheiten des Modul-Bausatzes (100) oder das Roboter- oder Logistikfahrzeug (1) kann auf beliebige Weise erfolgen. Gemäß einer bevorzugten Ausführungsvariante ist für alle Datenverbindungen ein einheitliches Steckerformat vorgesehen, insbesondere nach dem Ethernet- und EtherCat-Standard. Über die Datenleitungen kann auch ein Betriebsstrom für einen Teil der elektronischen Komponenten (15) erfolgen, insbesondere nach dem Power-Over-Ethernet-Standard.

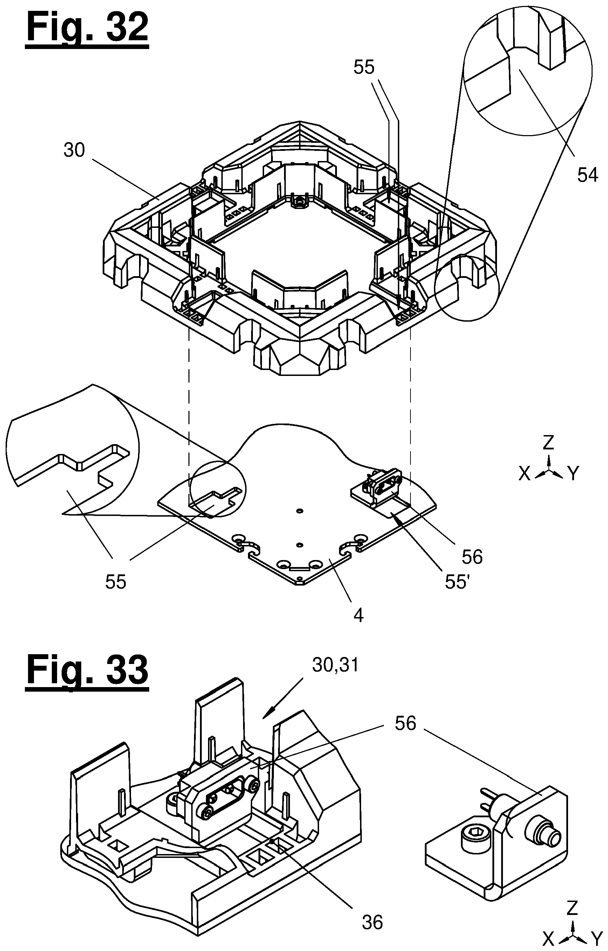

An mindestens einer Portöffnung (55') einer Deckplatte (4,5) kann bevorzugt ein Anschlussträger (56) vorgesehen sein, an dem ein Stecker, Schalter, Sensor oder sonstiges elektronisches Zusatzbauteil befestigbar ist. Der Anschlussträger (56) kann eine beliebige Bauform haben. Er ist bevorzugt als Winkelelement ausgebildet. Weiterhin bevorzugt kann der Anschlussträger (56) an einem Schlitzfortsatz einer Portöffnung (55') einschiebbar und beispielsweise durch eine Schraube und einen Nutenstein (9) befestigbar sein. Der Anschlussträger (56) kann weiter bevorzugt im vorgesehenen Montagezustand durch eine Portöffnung (55) am Profilaufsatz (30) nach oben ragen, so dass er fluchtend mit einer Aussparung (36) an einer Querwandung (33,34) des Kabelführungskanals (31) zu liegen kommt. Eine bevorzugte Ausführungsvariante eines Anschlussträgers (56) und dessen Anordnung ist in Figuren 32 und 33 gezeigt.

Abwandlungen der Erfindung sind in verschiedener Weise möglich. Insbesondere können alle zu den Ausführungsbeispielen gezeigten, beschriebenen oder beanspruchten Merkmale in beliebiger Weise miteinander kombiniert oder gegeneinander ersetzt werden.

In den gezeigten Ausführungsbeispielen sind alle Hauptkomponenten der gesteuerten Antriebsvorrichtung für das Roboterfahrzeug oder Logistikfahrzeug (1), d.h. der gesteuerte Radantrieb, eine Master-Batterie und das Antriebs-Steuergerät als eine elektronische Komponente (15, 15') ausgebildet, die in einem jeweiligen Modulblock (2, 2') angeordnet ist. Alternativ ist es möglich, ein Roboterfahrzeug (1) zu bilden, bei dem nur der mindestens eine gesteuerte Radantrieb in einem Modulblock (2) angeordnet ist und die sonstigen Hauptkomponenten eine andere Ausbildung oder Anordnung haben.

Ferner sind alle offenbarten Merkmale mit jedem der eigenständigen Aspekte der Offenbarung einzeln kombinierbar. Dies gilt insbesondere für den körperlichen Aufbau eines Modulblocks (2), der für sich allein oder in Kombination mit anderen Modulblöcken (2') und/oder in Kombination mit mindestens einer elektronischen Komponente (15, 15') nutzbar ist.

### BEZUGSZEICHENLISTE

- 1: Roboterfahrzeug / Logistikfahrzeug
- 2: Modulblock (Erster Modulblock)
- 2': weiterer Modulblock
- 3: Gehäuse
- 4: Deckplatte (obere) / Kopfplatte
- 5: Deckplatte (untere) / Fußplatte
- 6: Hohlraum
- 7: T-förmige Nut
- 8: Kastenprofilkörper
- 9: Nutenstein / Kulissenstein
- 10: Kragenleiste
- 11: Kanten-Längsnut
- 12: Seitenflächen-Längsnut
- 13: Schraubkanal
- 14: Komponentenaufnahme
- 15: Elektronische Komponente (Erste elektronische Komponente)
- 15': weitere elektronische Komponente
- 16: zurückversetzter Freiraum
- 17: Durchgang zwischen Kragenleisten
- 18: Befestigungskanal
- 19: Befestigungsöffnung
- 20: Befestigungsmittel / Schraube
- 21: Winkelbeschlag
- 22: Winkelbeschlag
- 23: Konstruktionsprofil / Profilstange
- 24: Passiver Block
- 25: Halbformat-Block / Slave-Batterie
- 30: Profilaufsatz
- 31: Kabelführungskanal (halboffen)
- 32: Mittelöffnung
- 33: innere Querwandung
- 34: äußere Querwandung
- 35: Bodenwandung
- 36: Aussparung
- 37: Bandführung
- 38: Leitung / Kabel
- 39: Kabelkanalabdeckung
- 40: Abdeckkappe
- 41: Rast-Befestigung
- 41': Rast-Befestigung
- 42: Mittelöffnung
- 50: Längskante
- 51: Eckbereich
- 52: Überstand / Ecküberstand
- 53: Durchbruch
- 54: T-förmige Randaussparung
- 55,55`: Portöffnung
- 56: Anschlussträger
- 60: Radantrieb (steuerbar)
- 61: Omnidirektionaler Radantrieb
- 62: passiver Radträger für omnidirektionale Bewegung
- 63: nicht-angetriebenes Rad
- 64: Bewegungserfassung
- 70: Energiespeicher-Block
- 71: Steuertechnik-Block
- 72: Antriebs-Block
- 73: Kommunikations-Block
- 74: Sensor-Block
- 75: Passivrad-Block
- 80: Zusatz-Trägerplatte
- 81: Sensor-Halterung
- 82: LIDAR-Sensor
- 83: Sensor-Halterung
- 84: Time-of-Flight Camera
- 85: Sensor-Halterung
- 86: 360° Laserscanner
- 87: Befestigungsadapter
- 88: Schaltmittel / Not-Aus Knopf
- 89: Display-Halterung
- 90: Graphisches Display
- 100: Modul-Bausatz
- 101: Nachbar-Verbinder
- 102: Nachbar-Verbinder
- 103: Doppel-T Passage
- 104: Spannmittel
- 105: Spannmittel
- 106: Klemmkörper
- 107: Klemmkörper
- 110: Bügelträger
- 111: Stapel-Verbinder
- 112: Distanzabschnitt
- 113: Befestigungslasche
- 114: Schulter
- 115: Befestigungslasche
- 116: Schulter
- 117: Stapel-Verbinder
- 118: Säulenkörper
- 119: Verbindungsscheibe
- 120: Tragaufbau
- 121: Angepasste Aufnahme
- 122: Werkstück
- BX: Erste Breite
- BY,: Zweite Breite
- BY' E: Einheits-Maß
- F: Flächenübergang
- d1: Abstand zwischen Nut-Mittellinien
- d2: Abstand Nut-Mittelinie zu Flächenübergang
- K: Kantenbereich
- L1: (Erste) Stapellage
- L2: Zweite / Weitere Stapellage
- M: Mittellinie
- O: offene Stirnseite / Oberseite
- U: offene Stirnseite / Unterseite
- QX: Querseite (erste Querseite)
- QY: Querseite (zweite Querseite)
- X: Erste Querrichtung / Horizontalrichtung
- Y: Zweite Querrichtung / Horizontalrichtung
- Z: Axialrichtung / Vertikalrichtung

## Patentansprüche

1. Modulblock zur Konstruktion eines Roboterfahrzeugs oder Logistikfahrzeugs (1), wobei der Modulblock (2) ein Gehäuse (3) umfasst, das eine Komponentenaufnahme (14) für eine erste elektronische Komponente (15) aufweist, die dazu ausgebildet ist, in Zusammenwirkung mit mindestens einer weiteren elektronischen Komponente (15') eines weiteren Modulblocks (2') eine gesteuerte Antriebsvorrichtung für das Roboterfahrzeug oder Logistikfahrzeug (1) zu schaffen, **dadurch gekennzeichnet , dass** das Gehäuse (3) des Modulblocks (2) einen geraden Kastenprofilkörper (8) umfasst, der eine Grundform mit einem entlang einer Axialrichtung (Z) einheitlichen Kastenquerschnitt aufweist, und wobei der Kastenprofilkörper (8) zu zwei gegenüberliegenden axialen Stirnseiten (O, U) offen ist und einen Hohlraum (6) ringförmig einschließt, und wobei an zumindest einer der offenen Stirnseiten (O, U) eine Deckplatte (4, 5) angeordnet ist, die die Öffnung in dieser Stirnseite (O, U) übergreift, und wobei an mindestens zwei und bevorzugt allen Außenwandungen des Kastenprofilkörpers (8), die orthogonal zu den offenen Stirnseiten (O, U) liegen, eine oder mehrere T-förmige Nuten (7) vorgesehen sind, und wobei der Modulblock (2) als Antriebs-Block (72) ausgebildet ist und als die erste elektronische Komponente (15) einen steuerbaren Radantrieb (60) umfasst.

2. Modulblock nach Anspruch 1, wobei der weitere Modulblock (2')
- als Energiespeicher-Block (70) ausgebildet ist und als weitere elektronische Komponente (15') eine Master-Batterie oder eine Slave-Batterie umfasst; oder
- als Steuertechnik-Block (71) ausgebildet ist und als weitere elektronische Komponente (15') ein Steuergerät umfasst; oder
- als Kommunikations-Block (73) ausgebildet ist und als weitere elektronische Komponente (15') ein Schnittstellen-Gerät umfasst;
- als Sensor-Block (74) ausgebildet ist und als weitere elektronische Komponente (15') ein Umgebungs-Erfassungsgerät umfasst;
- als Passivrad-Block (75) ausgebildet ist und mindestens ein nicht-angetriebenes Rad sowie als weitere elektronische Komponente (15') ein Bewegungserfassungsmittel zur Erfassung der Bewegung des nicht-angetriebenen Rads umfasst.

3. Modulblock nach einem der vorhergehenden Ansprüche, wobei der Modulblock (2) einen steuerbaren omnidirektionalen Radantrieb (61) umfasst.

4. Modulblock nach einem der vorhergehenden Ansprüche, wobei ein weiterer Modulblock (2') einen passiven Radträger (62) aufweist, der mindestens ein nicht-angetriebenes Rad (63) umfasst und dazu ausgebildet ist, eine omnidirektionale Bewegung zu unterstützen, wobei der passive Radträger (62) insbesondere ein Nachlaufkäfig ist.

5. Modulblock nach einem der vorhergehenden Ansprüche, wobei die Komponentenaufnahme (14) an der mindestens einen Deckplatte (4, 5) angeordnet oder durch die Deckplatte (4, 5) gebildet ist, insbesondere
- eine in der vorgesehenen Montageposition am oberen Ende des Kastenprofilkörpers (8) angeordnete Kopfplatte (4) und/oder
- eine in der vorgesehenen Montageposition am unteren Ende des Kastenprofilkörpers (8) angeordnete Fußplatte (5).

6. Modulblock nach einem der vorhergehenden Ansprüche, wobei die mindestens eine T-förmige Nut (7) parallel zur Axialrichtung (Z) orientiert ist.

7. Modulblock nach einem der vorhergehenden Ansprüche, wobei ein Kantenbereich (K) des Kastenprofilkörpers (8), der in der Längsrichtung (Z) orientiert ist und zwischen zwei Querseiten (QX, QY) des Kastenprofilkörpers (8) liegt,
- gefast ist und eine gegenüber den Querseiten (QX, QY) abgeschrägte Oberfläche hat; UND/ODER
- eine weitere T-förmige Nut (7) aufweist.

8. Modulblock nach einem der vorhergehenden Ansprüche, wobei der Kastenprofilkörper (8) mindestens einen Befestigungskanal (18) aufweist, der den Kastenprofilkörper (8) in der Längsrichtung (Z) durchdringt, wobei der mindestens eine Befestigungskanal (18) weiter insbesondere
- die Form eines Tunnels oder einer Kederführung aufweist; UND/ODER
- auf der Innenseite des Kastenprofilkörpers (8) angeordnet ist; UND/ODER
- ein Innengewinde aufweist und insbesondere einen Schraubkanal (13) bildet; UND/ODER
- in einer Querrichtung (X, Y) benachbart zu einer T-förmigen Nut (7) vorgesehen ist, insbesondere je ein Befestigungskanal (18) auf gegenüberliegenden Seiten der T-förmigen Nut (7) .

9. Modulblock nach einem der vorhergehenden Ansprüche, wobei der Modulblock (2, 2') einen Profilaufsatz (30) aufweist, und wobei der Profilaufsatz (30)
- an der Außenseite einer Deckplatte (4), insbesondere an der Außenseite der Kopfplatte (4), angeordnet und insbesondere befestigt ist; UND/ODER
- einen kragenförmig umlaufenden Kabelführungskanal (31) umfasst, der eine Mittelöffnung (32) umgibt; UND/ODER
- eine halboffene Kanalform mit einer Bodenwandung (35), einer zur Innenseite des Modulblocks (2) angrenzenden Querwandung (33) und einer zur Außenseite angrenzenden Querwandung (34) aufweist.

10. Modulblock nach einem der vorhergehenden Ansprüche, wobei eine Deckplatte (4, 5) eine Außenkontur hat, die
- Längskanten (50) aufweist, die mit der Außenkontur einer Stirnseite des Kastenprofilkörpers (8) im Bereich der Querseiten (QX, QY) fluchten, und
- zwischen den Längskanten liegende Eckbereiche (51) aufweist, die über die Außenkontur einer Stirnseite des Kastenprofilkörpers (8) im Kantenbereich (K) nach außen überstehen.

11. Modulblock nach einem der vorhergehenden Ansprüche, wobei eine Deckplatte (4, 5) benachbart zu einem Eckbereich (51) einen Durchbruch (53) aufweist, der insbesondere eine rechteckige Querschnittsform aufweist, und wobei der Durchbruch (53) derart angeordnet und dimensioniert ist, dass er im vorgesehenen Montagezustand der Deckplatte (4, 5) mit dem Freiraum (16) einer T-förmigen Nut (7) überlappt, die im Kantenbereich (K) des Kastenprofilkörpers (8) angeordnet ist.

12. Modul-Bausatz zur Bereitstellung eines Roboterfahrzeugs oder Logistikfahrzeugs (1), wobei der Modul-Bausatz eine Mehrzahl von Modulblöcken (2, 2') umfasst, die zueinander benachbart anordenbar und lösbar miteinander verbindbar sind, **dadurch gekennzeichnet, dass** ein erster Modulblock (2) der mehreren Modulblöcke (2, 2') nach einem der vorhergehenden Ansprüche ausgebildet ist.

13. Modul-Bausatz nach dem vorhergehenden Anspruch, wobei mindestens ein weiterer Modulblock (2, 2') des Modul-Bausatzes (100)
- als Energiespeicher-Block (70) ausgebildet ist und als weitere elektronische Komponente (15) eine Master-Batterie oder eine Slave-Batterie umfasst; oder
- als Steuertechnik-Block (71) ausgebildet ist und als weitere elektronische Komponente (15) ein Steuergerät umfasst; oder
- als Kommunikations-Block (73) ausgebildet ist und als weitere elektronische Komponente (15) ein Schnittstellen-Gerät umfasst;
- als Sensor-Block (74) ausgebildet ist und als weitere elektronische Komponente (15) ein Umgebungs-Erfassungsgerät umfasst;
- als Passivrad-Block (75) ausgebildet ist und mindestens ein nicht-angetriebenes Rad sowie als weitere elektronische Komponente (15) ein Bewegungserfassungsmittel zur Erfassung der Bewegung des nicht-angetriebenen Rads umfasst.

14. Modul-Bausatz nach einem der vorhergehenden Ansprüche, wobei der Modul-Bausatz (100) mindestens einen Nachbar-Verbinder (101, 102) aufweist, der dazu ausgebildet ist, in eine Doppel-T Passage (103) eingesetzt zu werden, die durch die Freiräume (16) von zwei benachbart angeordneten T-förmigen Nuten (7) sowie die Durchgänge (16) zwischen deren Kragenleisten (10) gebildet ist, und wobei der Nachbar-Verbinder (101, 102) mindestens ein Spannmittel (104, 105) aufweist, das durch ein in der Doppel-T Passage (103) führbares Werkzeug betätigbar ist, und wobei der Nachbar-Verbinder (101, 102) mindestens zwei Klemmkörper (106, 107) aufweist, die bei Betätigung des mindestens einen Spannmittels (104, 105) an die jeweiligen Innenseiten der Kragenleisten (10) der benachbarten T-förmigen Nuten (7) anlegbar sind, um diese miteinander zu fixieren.

15. Modul-Bausatz nach einem der vorhergehenden Ansprüche, wobei der Modulbausatz (100) einen Stapel-Verbinder (111, 117) umfasst, mit dem mindestens ein Modulblock (2) in einer ersten Stapellage (L1) mit einem Nachbarobjekt in einer darüber oder darunter befindlichen Stapellage (L2) lösbar fixierbar ist, wobei das Nachbarobjekt insbesondere ein weiterer Modulblock (2') ist.

## Claims

1. Module block for building a robot vehicle or logistics vehicle (1), wherein the module block (2) comprises a housing (3), which has a component receptacle (14) for a first electronic component (15), which is designed to act together with at least one further electronic component (15') of a further module block (2') in creating a controlled drive device for the robot vehicle or logistics vehicle (1), **characterized in that** the housing (3) of the module block (2) comprises a straight box profile body (8), which has a basic form with a box cross section which is uniform along an axial direction (Z), and wherein the box profile body (8) is open on two opposite axial end faces (O, U) and encloses a cavity (6) in an annular manner, and wherein a cover plate (4, 5) is arranged on at least one of the open end faces (O, U) and fits over the opening in this end face (O, U), and wherein one or more T-shaped grooves (7) are provided on at least two, and preferably all, outer walls of the box profile body (8) which lie orthogonal to the open end faces (O, U), and wherein the module block (2) is designed as a drive block (72) and comprises as the first electronic component (15) a controllable wheel drive (60) .

2. Module block according to Claim 1, wherein the further module block (2')
- is designed as an energy storage block (70) and comprises as the further electronic component (15') a master battery or a slave battery; or
- is designed as a control technology block (71) and comprises as the further electronic component (15') a control device; or
- is designed as a communications block (73) and comprises as the further electronic component (15') an interface device;
- is designed as a sensor block (74) and comprises as the further electronic component (15') an environment sensing device;
- is designed as a passive wheel block (75) and comprises at least one non-driven wheel and as a further electronic component (15') a movement sensing device for sensing the movement of the non-driven wheel.

3. Module block according to one of the preceding claims, wherein the module block (2) comprises a controllable omnidirectional wheel drive (61).

4. Module block according to one of the preceding claims, wherein a further module block (2') has a passive wheel carrier (62), which comprises at least one non-driven wheel (63) and is designed to assist an omnidirectional movement, wherein the passive wheel carrier (62) is in particular a trailing cage.

5. Module block according to one of the preceding claims, wherein the component receptacle (14) is arranged on the at least one cover plate (4, 5) or is formed by the cover plate (4, 5), in particular
- a head plate (4) arranged at the upper end of the box profile body (8) in the intended assembly position and/or
- a foot plate (5) arranged at the lower end of the box profile body (8) in the intended assembly position.

6. Module block according to one of the preceding claims, wherein the at least one T-shaped groove (7) is oriented parallel to the axial direction (Z).

7. Module block according to one of the preceding claims, wherein an edge region (K) of the box profile body (8) which is oriented in the longitudinal direction (Z) and lies between two transverse sides (QX, QY) of the box profile body (8)
- is chamfered and has a surface which is bevelled with respect to the transverse sides (QX, QY); AND/OR
- has a further T-shaped groove (7).

8. Module block according to one of the preceding claims, wherein the box profile body (8) has at least one fastening channel (18), which passes through the box profile body (8) in the longitudinal direction (Z), wherein the at least one fastening channel (18) also has in particular
- the form of a tunnel or a weatherstrip guide; AND/OR
- is arranged on the inner side of the box profile body (8); AND/OR
- has an internal thread and in particular forms a screw channel (13); AND/OR
- is provided alongside a T-shaped groove (7) in a transverse direction (X, Y),
in particular a fastening channel (18) on each of the opposite sides of the T-shaped groove (7).

9. Module block according to one of the preceding claims, wherein the module block (2, 2') has a profile attachment (30), and wherein the profile attachment (30)
- is arranged, and in particular fastened, on the outer side of a cover plate (4), in particular on the outer side of the head plate (4), AND/OR
- comprises a cable guiding channel (31) running around in the form of a collar, which surrounds a central opening (32); AND/OR
- has a half-open channel form with a bottom wall (35), a transverse wall (33) adjacent to the inner side of the module block (2) and a transverse wall (34) adjacent to the outer side.

10. Module block according to one of the preceding claims, wherein a cover plate (4, 5) has an outer contour which
- has longitudinal edges (50), which are in line with the outer contour of an end face of the box profile body (8) in the region of the transverse sides (QX, QY), and
- has corner regions (51), which lie between the longitudinal edges and project outwards beyond the outer contour of an end face of the box profile body (8) in the edge region (K).

11. Module block according to one of the preceding claims, wherein a cover plate (4, 5) has alongside a corner region (51) an aperture (53), which has in particular a rectangular cross-sectional form, and wherein the aperture (53) is arranged and dimensioned in such a way that, in the intended assembly state of the cover plate (4, 5), it overlaps with the clearance (16) of a T-shaped groove (7) which is arranged in the edge region (K) of the box profile body (8).

12. Module kit for providing a robot vehicle or logistics vehicle (1), wherein the module kit comprises a plurality of module blocks (2, 2'), which can be arranged next to one another and can be detachably connected to one another, **characterized in that** a first module block (2) of the plurality of module blocks (2, 2') is designed according to one of the preceding claims.

13. Module kit according to the preceding claim, wherein at least one further module block (2, 2') of the module kit (100)
- is designed as an energy storage block (70) and comprises as the further electronic component (15) a master battery or a slave battery; or
- is designed as a control technology block (71) and comprises as the further electronic component (15) a control device; or
- is designed as a communications block (73) and comprises as the further electronic component (15) an interface device;
- is designed as a sensor block (74) and comprises as the further electronic component (15) an environment sensing device;
- is designed as a passive wheel block (75) and comprises at least one non-driven wheel and comprises as a further electronic component (15) a movement sensing device for sensing the movement of the non-driven wheel.

14. Module kit according to one of the preceding claims, wherein the module kit (100) has at least one neighbour connector (101, 102), which is designed to be inserted into a double-T passage (103) which is formed by the clearances (16) of two adjacently arranged T-shaped grooves (7) and the passages (16) between their collar strips (10), and wherein the neighbour connector (101, 102) has at least one clamping means (104, 105), which can be actuated by a tool that can be guided in the double-T passage (103), and wherein the neighbour connector (101, 102) has at least two clamping bodies (106, 107), which upon actuation of the at least one clamping means (104, 105) can be placed against the respective inner sides of the collar strips (10) of the adjacent T-shaped grooves (7) in order to fix them to one another.

15. Module kit according to one of the preceding claims, wherein the module kit (100) comprises a stack connector (111, 117), with which at least one module block (2) in a first stack layer (L1) can be detachably fixed to a neighbouring object in a stack layer (L2) located above or below it, wherein the neighbouring object is in particular a further module block (2').

## Revendications

1. Bloc modulaire destiné à la construction d'un véhicule robotique ou d'un véhicule logistique (1), le bloc modulaire (2) comprenant un boîtier (3) qui comporte un logement de composant (14) destiné à un premier composant électronique (15) qui est conçu pour créer un dispositif d'entraînement commandé du véhicule robotique ou du véhicule logistique (1) en coopération avec au moins un autre composant électronique (15') d'un autre bloc modulaire (2'), **caractérisé en ce que** le boîtier (3) du bloc modulaire (2) comprend un corps profilé en caisson droit (8) qui présente une forme de base ayant une section transversale de caisson uniforme le long d'une direction axiale (Z), et le corps profilé en caisson (8) étant ouvert sur deux côtés frontaux axiaux opposés (O, U) et incluant une cavité (6) sous forme annulaire, et une plaque de recouvrement (4, 5), qui s'engage par-dessus l'ouverture ménagée dans ce côté frontal (O, U), étant disposée sur au moins un des côtés frontaux ouverts (O, U) et une ou plusieurs rainures (7) en forme de T étant prévues sur au moins deux parois extérieures, de préférence toutes, du corps profilé en caisson (8) qui sont orthogonales aux côtés frontaux ouverts (O, U), et le bloc modulaire (2) étant conçu comme un bloc d'entraînement (72) et comprenant un entraînement de roue commandable (60) comme premier composant électronique (15).

2. Bloc modulaire selon la revendication 1, l'autre bloc modulaire (2')
- étant conçu comme un bloc de stockage d'énergie (70) et comprenant une batterie maître ou une batterie esclave comme autre composant électronique (15') ; ou
- étant conçu comme un bloc de technologie de commande (71) et comprenant une unité de commande comme autre composant électronique (15') ; ou
- étant conçu comme un bloc de communication (73) et comprenant une unité d'interface comme autre composant électronique (15') ;
- étant conçu comme un bloc capteur (74) et comprenant une unité de détection d'environnement comme autre composant électronique (15') ;
- étant conçu comme un bloc de roue passif (75) et comprenant au moins une roue non motrice et, comme autre composant électronique (15'), un moyen de détection de mouvement destiné à détecter le mouvement de la roue non motrice.

3. Bloc modulaire selon l'une des revendications précédentes, le bloc modulaire (2) comprenant un entraînement de roue omnidirectionnel commandable (61).

4. Bloc modulaire selon l'une des revendications précédentes, un autre bloc modulaire (2') comportant un support de roue passif (62) qui comprend au moins une roue non motrice (63) et qui est conçu pour supporter un mouvement omnidirectionnel, le support de roue passif (62) étant en particulier une cage à inertie.

5. Bloc modulaire selon l'une des revendications précédentes, le logement de composant (14) étant disposé sur au moins une plaque de recouvrement (4, 5) ou étant formé par la plaque de recouvrement (4, 5), en particulier
- une plaque de tête (4) étant disposée dans la position de montage prévue à l'extrémité supérieure du corps profilé en caisson (8) et/ou
- une plaque de pied (5) étant disposée dans la position de montage prévue à l'extrémité inférieure du corps profilé en caisson (8).

6. Bloc modulaire selon l'une des revendications précédentes, les au moins une rainures (7) en forme de T étant orientées parallèlement à la direction axiale (Z) .

7. Bloc modulaire selon l'une des revendications précédentes, une zone de bord (K) du corps profilé en caisson (8), qui est orientée dans la direction longitudinale (Z) et qui est située entre deux côtés transversaux (QX, QY) du corps profilé en caisson (8),
- étant chanfreinée et comportant une surface biseautée par rapport aux côtés transversaux (QX, QY) ; ET/OU
- comportant une autre rainure (7) en forme de T.

8. Bloc modulaire selon l'une des revendications précédentes, le corps profilé en caisson (8) comportant au moins un conduit de fixation (18) qui pénètre dans le corps profilé en caisson (8) dans la direction longitudinale (Z), en outre et en particulier l'au moins un conduit de fixation (18)
- ayant la forme d'un tunnel ou d'un guide de passepoil ; ET/OU
- étant disposé sur le côté intérieur du corps profilé en caisson (8) ; ET/OU
- comportant un filetage intérieur et formant notamment un conduit de vis (13) ; ET/OU
- étant prévu dans une direction transversale (X, Y) de manière adjacente à une rainure (7) en forme de T, en particulier un conduit de fixation (18) sur des côtés opposés de la rainure (7) en forme de T.

9. Bloc modulaire selon l'une des revendications précédentes, le bloc modulaire (2, 2') comportant une fixation profilée (30), et la fixation profilée (30)
- étant disposée, et en particulier fixée, au côté extérieur d'une plaque de recouvrement (4), en particulier au côté extérieur de la plaque de tête (4) ; ET/OU
- comprenant un conduit de guidage de câble qui s'étend périphériquement en forme de collier (31) et qui entoure une ouverture médiane (32) ; ET/OU
- comportant une forme de conduit semi-ouvert pourvue d'une paroi de fond (35), d'une paroi transversale (33) adjacente au côté intérieur du bloc modulaire (2) et une paroi transversale (34) adjacente au côté extérieur.

10. Bloc modulaire selon l'une des revendications précédentes, une plaque de recouvrement (4, 5) présentant un contour extérieur qui
- comporte des bords longitudinaux (50) qui sont alignés avec le contour extérieur d'un côté frontal du corps profilé en caisson (8) dans la zone des côtés transversaux (QX, QY), et
- comporte des zones de coin (51) qui sont situées entre les bords longitudinaux et qui font saillie vers l'extérieur du contour extérieur d'un côté frontal du corps profilé en caisson (8) dans la zone de bord (K).

11. Bloc modulaire selon l'une des revendications précédentes, une plaque de recouvrement (4, 5) comportant de manière adjacente à une zone de coin (51) un passage (53) qui présente en particulier une forme rectangulaire en coupe transversale, et le passage (53) étant disposé et dimensionné de manière à recouvrir, dans l'état de montage prévu de la plaque de recouvrement (4, 5), l'espace libre (16) d'une rainure (7) en forme de T qui est disposée dans la zone de bord (K) du corps profilé en caisson (8).

12. Ensemble de modules destiné à fournir un véhicule robotique ou un véhicule logistique (1), l'ensemble de modules comprenant une pluralité de blocs modulaires (2, 2') qui peuvent être disposés de manière adjacente les uns aux autres et qui peuvent être reliés de manière amovible les uns aux autres, **caractérisé en ce qu'**un premier bloc modulaire (2) des plusieurs blocs modulaires (2, 2') est conçu selon l'une des revendications précédentes.

13. Ensemble de modules selon la revendication précédente, au moins un autre bloc modulaire (2, 2') de l'ensemble de modules (100)
- étant conçu comme bloc de stockage d'énergie (70) et comprenant une batterie maître ou une batterie esclave comme autre composant électronique (15) ; ou
- étant conçu comme un bloc de technologie de commande (71) et comprenant une unité de commande comme autre composant électronique (15) ; ou
- étant conçu comme un bloc de communication (73) et comprenant une unité d'interface comme autre composant électronique (15) ;
- étant conçu comme un bloc capteur (74) et comprenant une unité de détection d'environnement comme autre composant électronique (15) ;
- étant conçu comme un bloc de roue passif (75) et comprenant au moins une roue non motrice et, comme autre composant électronique (15), un moyen de détection de mouvement destiné à détecter le mouvement de la roue non motrice.

14. Ensemble de modules selon l'une des revendications précédentes, l'ensemble de modules (100) comportant au moins un connecteur voisin (101, 102) qui est conçu pour être inséré dans un passage en double T (103) qui est formé par les espaces libres (16) de deux rainures (7) en forme de T disposées de manière adjacente et les passages (16) étant formés entre leurs nervures formant collet (10), et le connecteur voisin (101, 102) comportant au moins un moyen de serrage (104, 105) qui peut être actionné par le biais d'un outil pouvant être guidé dans le passage en double T (103), et le connecteur voisin (101, 102) comportant au moins deux corps de serrage (106, 107) qui, lorsque l'au moins un moyen de serrage (104, 105) est actionné, sont appliqués sur les côtés intérieurs respectifs des nervures formant collet (10) des rainures (7) en forme de T adjacentes afin de les fixer l'un à l'autre.

15. Ensemble de modules selon l'une des revendications précédentes, l'ensemble de modules (100) comprenant un connecteur d'empilement (111, 117) permettant de fixer au moins un bloc modulaire (2), situé dans une première couche d'empilement (L1), de manière amovible à un objet adjacent situé dans une couche d'empilement (L2) sus-jacente ou sous-jacente, l'objet adjacent étant notamment un autre bloc modulaire (2').
